# EUROPEAN PATENT APPLICATION

(11) **EP 4 759 759 A1**
(43) Date of publication of application: **17.06.2026**
(21) Application number: 25823106.7
(22) Date of filing: 06.06.2025
(51) Int. Cl.: B65G 47/50, B65G 1/04

(54) **WORKSTATION, WAREHOUSING SYSTEM, METHOD FOR GOODS PICKING AT WORKSTATION, AND STORAGE MEDIUM**

(30) Priority: 09.09.2024 CN 202411265925
(71) Applicant: Hai Robotics Co., Ltd., Shenzhen, Guangdong 518000 (CN)
(72) Inventor: XU, Bo, Shenzhen, Guangdong 518000 (CN)
(74) Representative: Gulde & Partner
(86) International application number: PCT/CN2025/099621
(87) International publication number: WO 2026/051473

(57) **Abstract**

This application relates to the technical field of intelligent warehousing, and discloses a workstation, a warehousing system, a method for picking goods at a workstation, and a storage medium. The workstation includes an inventory case area, an order case area, and a picking position. The inventory case area includes a first station entry passage, a goods-picking position, and a first station exit passage arranged in sequence, and further includes a standby passage adjacent to the first station entry passage. The order case area includes a second station entry passage, a delivery position, and a second station exit passage arranged in sequence, and further includes a plurality of temporary storage positions located between the second station entry passage and the second station exit passage. The plurality of temporary storage positions are configured to temporarily store order cases on which picking required by an order task is not completed, a second transport robot temporarily stored in the temporary storage position enters the second station entry passage in a first sequence, and the first sequence is determined based on a second sequence of inventory cases on the first station entry passage, so that the order case arriving at the delivery position matches the inventory case arriving at the goods-picking position. This application improves picking efficiency at a workstation and reduces picking errors.

## Description

### CROSS-REFERENCES

This application claims priority to Chinese Patent Application No. 202411265925.9, filed with the China National Intellectual Property Administration on September 9, 2024 and entitled "WORKSTATION, WAREHOUSING SYSTEM, METHOD FOR PICKING GOODS AT WORKSTATION, AND STORAGE MEDIUM", which is incorporated by reference herein in its entirety.

### TECHNICAL FIELD

Embodiments of this application relate to the technical field of warehousing and logistics, and in particular, to a workstation, a warehousing system, a method for picking goods at a workstation, and a storage medium.

### BACKGROUND OF THE INVENTION

Goods picking is an important part in warehousing and distribution in logistics. Ensuring continuous and efficient picking can improve overall outbound efficiency of goods. In the related art, a warehousing system of a logistics center generally includes devices such as a shelving unit, a picking workstation, and a transport device. The picking workstation usually adopts a traditional put wall workstation. A goods picking work during inbound and outbound of goods is completed by picking personnel. During picking, goods are classified based on an order task or a goods type, and are placed into corresponding storage slots of a put wall based on a classification result. A transport device such as a transport robot transports the goods in the storage slots to implement outbound and inbound of the goods.

However, a current put wall workstation has relatively low sorting efficiency and is vulnerable to erroneous goods picking.

### SUMMARY OF THE INVENTION

In view of the above problem, embodiments of this application provide a workstation, a warehousing system, a method for picking goods at a workstation, and a storage medium, to solve a problem in the prior art that a workstation has relatively low picking efficiency and is vulnerable to erroneous goods picking.

According to a first aspect of the embodiments of this application, a workstation is provided for goods picking. The workstation includes an inventory case area, an order case area, and a picking position.

The inventory case area includes a first station entry passage, a goods-picking position, and a first station exit passage arranged in sequence, and further includes a standby passage adjacent to the first station entry passage.

The first station entry passage is configured for a first transport robot traveling into the inventory case area to walk to the goods-picking position, and the first transport robot carries an inventory case in which goods are stored.

The standby passage is configured for the first transport robot traveling into the inventory case area to stay and wait to move into the first station entry passage when no idle queue position exists on the first station entry passage.

The first station exit passage is configured for the first transport robot traveling out from the goods-picking position to travel out of the inventory case area.

The order case area includes a second station entry passage, a delivery position, and a second station exit passage arranged in sequence, and further includes a plurality of temporary storage positions located between the second station entry passage and the second station exit passage.

The second station entry passage is configured for a second transport robot traveling into the order case area to walk to the delivery position, the second transport robot carries an order case, and the order case is configured to receive goods picked from the inventory case.

The plurality of temporary storage positions each are configured to temporarily store a second transport robot carrying a first-type order case, the first-type order case is an order case in which partial picked goods are stored, a walking direction of the second transport robot temporarily stored in the temporary storage position is perpendicular to a walking direction of the second transport robot on the second station entry passage or the second station exit passage, the second transport robot temporarily stored in the temporary storage position enters the second station entry passage in a first sequence, and the first sequence is determined based on a second sequence of inventory cases on the first station entry passage, so that the order case arriving at the delivery position matches the inventory case arriving at the goods-picking position.

The second station exit passage is configured for a second transport robot traveling out from the delivery position to travel out of the order case area or for the second transport robot traveling out from the delivery position to travel into the temporary storage position.

The picking position is adjacent to the goods-picking position and the delivery position, and is configured to accommodate a picking person or to be provided with a picking device, so that the picking person or the picking device picks goods from an inventory case located at the goods-picking position and places the goods into an order case located at the delivery position.

In this embodiment of this application, the workstation is divided into the inventory case area, the order case area, and the picking position. The first transport robot carrying the inventory case enters the first station entry passage of the inventory case area in sequence to queue, and then carries the inventory case in sequence to the goods-picking position of the inventory case area. Moreover, the second transport robot carrying the order case enters the second station entry passage of the order case area in sequence, and then carries the order case to the delivery position of the order case area. The picking person or the picking device picks goods from the inventory case at the goods-picking position and places the goods into the order case at the delivery position. An order case on which pocking required by the order task is not fully completed is carried away from the delivery position by the second transport robot, which enters the temporary storage position in the order case area for temporary storage and then enters the second station entry passage in a first sequence. The first sequence is determined based on a second sequence of inventory cases on the first station entry passage, so that the order case re-arriving at the delivery position matches the inventory case arriving at the goods-picking position. Because the first transport robot carries the inventory case to the goods-picking position adjacent to the picking position, the second transport robot carries the order case to the delivery position adjacent to the picking position, and the second transport robot implements temporary storage, sorting, and switching of the order case based on the sequence of the inventory cases on the first station entry passage, the inventory case arriving at the goods-picking position matches the order case arriving at the delivery position, so that the picking person or the picking device can perform picking, thereby improving picking efficiency at the workstation, reducing labor intensity of the picking person, and reducing picking errors.

In some embodiments, the standby passage is further configured for the first transport robot on the first station entry passage to move into to adjust the second sequence.

In some embodiments, the first station entry passage, the standby passage, the first station exit passage, the second station entry passage, the plurality of temporary storage positions, and the second station exit passage are all arranged in parallel along a first direction, a station entry direction of the first station entry passage is opposite to a station exit direction of the first station exit passage, and a station entry direction of the second station entry passage is opposite to a station exit direction of the second station exit passage.

In some embodiments, the first station entry passage, the standby passage, and the first station exit passage are all arranged in parallel along a second direction, and a station entry direction of the first station entry passage is opposite to a station exit direction of the first station exit passage.

The second station entry passage, the plurality of temporary storage positions, and the second station exit passage are all arranged in parallel along a first direction, and a station entry direction of the second station entry passage is opposite to a station exit direction of the second station exit passage.
the first direction is perpendicular to the second direction, and in the first direction, the inventory case area and the order case area are respectively located on two sides of the picking position.

In some embodiments, the inventory case area further includes a standby goods-picking position located upstream of the goods-picking position, and the standby goods-picking position and the goods-picking position are arranged in sequence along an arc-shaped path between the first station entry passage and the first station exit passage.

The order case area further includes a standby delivery position located upstream of the delivery position, and the standby delivery position and the delivery position are arranged in sequence along an arc-shaped path between the second station entry passage and the second station exit passage.

In the first direction, the inventory case area and the order case area are located on a same side of the picking position.

In some embodiments, the inventory case area further includes a standby goods-picking position located upstream of the goods-picking position, and the standby goods-picking position, the goods-picking position, and the first station exit passage are arranged in sequence along the station exit direction of the first station exit passage.

The order case area further includes a standby delivery position located upstream of the delivery position, and the standby delivery position and the delivery position are arranged in sequence along an arc-shaped path between the second station entry passage and the second station exit passage.

In some embodiments, a temporary storage position among the plurality of temporary storage positions closest to the delivery position is a first temporary storage position, and the standby delivery position, the delivery position, and the first temporary storage position are arranged in sequence along a roundabout path.

In some embodiments, the standby passage is located between the first station entry passage and the first station exit passage.

In some embodiments, the workstation further includes an isolation portion arranged between the inventory case area and the picking position and between the order case area and the picking position.

In some embodiments, the isolation portion includes a first barrier and a second barrier, the first barrier is located between the inventory case area and the picking position, and the second barrier is located between the order case area and the picking position.

In some embodiments, the first station entry passage includes a plurality of first queue positions, the standby passage includes a plurality of standby positions, the goods-picking position, each of the first queue positions, and each of the standby positions each are provided with an identification element, and the identification element is configured to be identified by the first transport robot to achieve positioning of the first transport robot.

The second station entry passage includes a plurality of second queue positions, the second station exit passage includes a plurality of second station exit positions, the delivery position, each of the second queue positions, each of the second station exit positions, and each of the temporary storage positions each are provided with an identification element, and the identification element is configured to be identified by the second transport robot to achieve positioning of the second transport robot.

According to a second aspect of the embodiments of this application, a workstation is provided for goods picking. The workstation includes an inventory case conveyor line, an order case area, and a picking position.

The inventory case conveyor line has a goods-picking position, a first transport robot is configured to carry an inventory case to an inlet of the inventory case conveyor line in sequence, and the inventory case conveyor line is configured to convey the inventory case from the inlet to the goods-picking position, so as to provide the inventory case at the goods-picking position in a second sequence, where the inventory case is configured to store goods.

The inventory case conveyor line is further configured to convey an inventory case outputted from the goods-picking position to an outlet of the inventory case conveyor line, and the first transport robot is further configured to carry the inventory case to the inlet and then walk to the outlet of the inventory case conveyor line, to take out the inventory case located at the outlet and then travel out of the workstation.

The order case area includes an order case station-entry passage, a delivery position, and an order case station-exit passage arranged in sequence, and further includes a plurality of temporary storage positions located between the order case station-entry passage and the order case station-exit passage.

The order case station-entry passage is configured for a second transport robot to travel into the order case area and walk to the delivery position, the second transport robot carries an order case, and the order case is configured to receive goods picked from the inventory case.

The plurality of temporary storage positions each are configured to temporarily store a second transport robot carrying a first-type order case, the first-type order case is an order case in which partial picked goods are stored, a walking direction of the second transport robot temporarily stored in the temporary storage position is perpendicular to a walking direction of the second transport robot in the order case station-entry passage or the order case station-exit passage, the second transport robot temporarily stored in the temporary storage position enters the order case station-entry passage in a first sequence, and the first sequence is determined based on the second sequence, so that the order case arriving at the delivery position matches the inventory case arriving at the goods-picking position.

The order case station-exit passage is configured for a second transport robot traveling out from the delivery position to travel out of the order case area or for the second transport robot traveling out from the delivery position to travel into the temporary storage position.

The picking position is adjacent to a projection of the goods-picking position on a ground and the delivery position, and is configured to accommodate a picking person or to be provided with a picking device, so that the picking person or the picking device picks goods from an inventory case located at the goods-picking position and places the goods into an order case located at the delivery position.

In this embodiment of this application, the workstation is divided into the inventory case conveyor line, the order case area, and the picking position. The first transport robot carrying the inventory case carries the inventory case in sequence to the inventory case conveyor line, and the inventory case conveyor line conveys the inventory case in sequence to the goods-picking position. Moreover, the second transport robot carrying the order case enter the order case station-entry passage of the order case area in sequence, and then carries the order case to the delivery position of the order case area. The picking person or the picking device picks goods from the inventory case at the goods-picking position and places the goods into the order case at the delivery position. An order case on which pocking required by the order task is not fully completed is carried away from the delivery position by the second transport robot, which enters the temporary storage position in the order case area for temporary storage and then enters the order case station-entry passage in a first sequence. The first sequence is determined based on the second sequence of inventory cases in the inventory case conveyor line, so that the order case re-arriving at the delivery position matches the inventory case arriving at the goods-picking position. Because the first transport robot and the inventory case conveyor line convey the inventory case to the goods-picking position adjacent to the picking position, the second transport robot carries the order case to the delivery position adjacent to the picking position, and the second transport robot implements temporary storage, sorting, and switching of the order case based on the second sequence of the inventory cases on the inventory case conveyor line, the inventory case arriving at the goods-picking position matches the order case arriving at the delivery position, so that the picking person or the picking device can perform picking, thereby improving picking efficiency at the workstation, reducing labor intensity of the picking person, and reducing picking errors.

In some embodiments, in a vertical direction, the inventory case conveyor line is located at an upper layer of the order case area.

In some embodiments, the inventory case conveyor line includes a first conveyor line, a second conveyor line, and a third conveyor line, the first conveyor line and the second conveyor line are arranged in parallel along a first direction, the third conveyor line is arranged along a second direction and is configured to connect to the first conveyor line and the second conveyor line, the goods-picking position is provided at an outlet of the third conveyor line or at an inlet of the second conveyor line, the first direction is perpendicular to the second direction, and conveying directions of the first conveyor line and the second conveyor line are opposite.

The first transport robot is configured to carry the inventory case in sequence to an inlet of the first conveyor line, the first conveyor line is configured to convey the inventory case to the third conveyor line, and the third conveyor line is configured to convey the inventory case to the goods-picking position, to provide the inventory case at the goods-picking position in the second sequence.

The second conveyor line is configured to convey the inventory case outputted from the goods-picking position to an outlet of the second conveyor line, and the first transport robot is further configured to carry the inventory case to the inlet of the first conveyor line and then walk to the outlet of the second conveyor line, to take out the inventory case located at the outlet of the second conveyor line and then travel out of the workstation.

The order case station-entry passage, the plurality of temporary storage positions, and the order case station-exit passage are all arranged in parallel along the first direction, and a station entry direction of the order case station-entry passage is opposite to a station exit direction of the order case station-exit passage.

In some embodiments, the order case area further includes a standby delivery position located upstream of the delivery position, and the standby delivery position and the delivery position are arranged in sequence along an arc-shaped path between the order case station-entry passage and the order case station-exit passage.

In the second direction, the inventory case conveyor line and the order case area are located on a same side of the picking position.

In some embodiments, a temporary storage position among the plurality of temporary storage positions closest to the delivery position is a first temporary storage position, and the standby delivery position, the delivery position, and the first temporary storage position are arranged in sequence along a roundabout path.

In some embodiments, the workstation further includes an isolation portion arranged between the order case area and the picking position.

In some embodiments, the order case station-entry passage includes a plurality of order case queue positions, the order case station-exit passage includes a plurality of order case station-exit positions, the delivery position, each of the order case queue positions, each of the order case station-exit positions, and each of the temporary storage positions each are provided with an identification element, and the identification element is configured to be identified by the second transport robot to achieve positioning of the second transport robot.

According to a third aspect of the embodiments of this application, a warehousing system is provided. The warehousing system includes shelving unit, a first transport robot, a second transport robot, and the workstation according to any one of the embodiments described above.

The shelving unit is configured to store an inventory case and an order case.

The first transport robot is configured to carry an inventory case for which picking is to be performed from the shelving unit to the workstation and carry an inventory case for which picking is performed from the workstation to the shelving unit.

The second transport robot is configured to carry an empty order case from the shelving unit to the workstation and carry an order case on which picking required by the order task is completed out of the workstation.

According to a fourth aspect of the embodiments of this application, a method for picking goods at a workstation is provided, which is applied to a server in a warehousing system. The workstation includes an inventory case area, an order case area, and a picking position. The inventory case area includes a first station entry passage, a goods-picking position, and a first station exit passage arranged in sequence, and further includes a standby passage adjacent to the first station entry passage. The first station entry passage is configured for a first transport robot traveling into the inventory case area to walk to the goods-picking position, and the first transport robot carries an inventory case in which goods are stored. The standby passage is configured for the first transport robot traveling into the inventory case area to stay and wait to move into the first station entry passage when no idle queue position exists on the first station entry passage. The first station exit passage is configured for the first transport robot traveling out from the goods-picking position to travel out of the inventory case area. The order case area includes a second station entry passage, a delivery position, and a second station exit passage arranged in sequence, and further includes a plurality of temporary storage positions located between the second station entry passage and the second station exit passage. The second station entry passage is configured for a second transport robot traveling into the order case area to walk to the delivery position, the second transport robot carries an order case, and the order case is configured to receive goods picked from the inventory case. The plurality of temporary storage positions each are configured to temporarily store a second transport robot carrying a first-type order case, the first-type order case is an order case in which partial picked goods are stored, and a walking direction of the second transport robot temporarily stored in a temporary storage position is perpendicular to a walking direction of the second transport robot on the second station entry passage or the second station exit passage. The second station exit passage is configured for a second transport robot traveling out from the delivery position to travel out of the order case area or for the second transport robot traveling out from the delivery position to travel into the temporary storage position. The picking position is adjacent to the goods-picking position and the delivery position, and is configured to accommodate a picking person or to be provided with a picking device, so that the picking person or the picking device picks goods from an inventory case located at the goods-picking position and places the goods into an order case located at the delivery position.

The method includes:
obtaining an order task;
controlling the first transport robot to carry an inventory case corresponding to the order task to the goods-picking position;
controlling the second transport robot to carry an empty order case to the delivery position;
controlling the first transport robot to travel out of the inventory case area after it is determined that to-be-picked goods in the inventory case are delivered to the order case, and determining whether picking required by the order task is completed;
controlling the second transport robot to travel out of the order case area if the picking required by the order task is completed; and
controlling, if the picking required by the order task is not completed, the second transport robot to enter an idle temporary storage position, and controlling the second transport robot to enter the second station entry passage from the temporary storage position based on a first sequence, so as to re-carry the order case to the delivery position, where the first sequence is determined based on a second sequence of inventory cases on the first station entry passage, so that the order case arriving at the delivery position matches the inventory case arriving at the goods-picking position.

In some embodiments, the method further includes:
predicting a sequence in which the inventory cases arrive at the workstation, determining the second sequence of the inventory cases on the first station entry passage based on the sequence in which the inventory cases arrive at the workstation, and determining the first sequence based on the second sequence; or
obtaining a position of the first transport robot on the first station entry passage, determining the second sequence of the inventory cases on the first station entry passage based on the position, and determining the first sequence based on the second sequence.

In some embodiments, the second station entry passage, the plurality of temporary storage positions, and the second station exit passage are all arranged in parallel along a first direction, and a station entry direction of the second station entry passage is opposite to a station exit direction of the second station exit passage.

The controlling the second transport robot to enter the second station entry passage from the temporary storage position based on a first sequence includes:
determining a first position of the order case carried by the second transport robot temporarily stored at the temporary storage position in the first sequence, and determining a second position on the second station entry passage side by side with the temporary storage position in a second direction, where the second direction is perpendicular to the first direction;
controlling, if a second transport robot carrying an order case that follows the first position in the first sequence enters the second station entry passage, the second transport robot carrying an order case that follows the first position in the first sequence to wait upstream of the second position on the second station entry passage;
determining whether all order cases before the first position in the first sequence are on the second station entry passage and located downstream of the second position on the second station entry passage; and
controlling, if so, the second transport robot to move from the temporary storage position to the second position on the second station entry passage.

In some embodiments, the controlling the second transport robot to enter the second station entry passage from the temporary storage position based on a first sequence includes:
determining whether paths for all order cases in the first sequence located before the order case to arrive at the delivery position are shorter than a path for the order case to arrive at the delivery position;
controlling, if so, the second transport robot to move from the temporary storage position into the second station entry passage, so that a position of the order case on the second station entry passage conforms to the first sequence; and
controlling, if not, the second transport robot to remain in the temporary storage position until the paths for all of the order cases in the first sequence located before the order case to arrive at the delivery position are shorter than the path for the order case to arrive at the delivery position, and controlling the second transport robot to move from the temporary storage position into the second station entry passage, so that the position of the order case on the second station entry passage conforms to the first sequence.

In some embodiments, If the picking required by the order task is not completed, the method further includes:
determining a relationship between a next position and a current position of the order case in the first sequence; and
if the next position of the order case in the first sequence is adjacent to the current position,
controlling the second transport robot to remain in the delivery position to wait for a next inventory case to arrive at the goods-picking position for further picking.

In some embodiments, the order case area further includes a standby delivery position located upstream of the delivery position.

If the picking required by the order task is not completed, the method further includes:
determining a relationship between a next position and a current position of the order case in the first sequence; and
controlling, if one position exists between the next position and the current position of the order case in the first sequence, the second transport robot to travel out of the delivery position and travel into the standby delivery position to wait after a second transport robot located at the standby delivery position travels into the delivery position.

In some embodiments, the order case area further includes a standby delivery position located upstream of the delivery position, a temporary storage position among the plurality of temporary storage positions closest to the delivery position is a first temporary storage position, and the standby delivery position, the delivery position, and the first temporary storage position are arranged in sequence along a roundabout path; and
the controlling the second transport robot to enter an idle temporary storage position includes: determining a relationship between a next position and a current position of the order case in the first sequence; and
controlling, if two positions exist between a next position and a current position of the order case in the first sequence, the second transport robot to travel out of the delivery position and travel into the first temporary storage position for temporary storage.

In some embodiments, the order case area further includes a standby delivery position located upstream of the delivery position, a temporary storage position among the plurality of temporary storage positions closest to the delivery position is a first temporary storage position, and the standby delivery position, the delivery position, and the first temporary storage position are arranged in sequence along a roundabout path; and
the controlling the second transport robot to enter an idle temporary storage position includes: determining a relationship between a next position and a current position of the order case in the first sequence; and
determining, if at least three positions exist between a next position and a current position of the order case in the first sequence, whether any order case among order cases in the first sequence located between the current position and next position needs to use the first temporary storage position;
controlling, if so, the second transport robot to travel out of the delivery position and then travel into an idle temporary storage position other than the first temporary storage position for temporary storage; and
controlling, if not, the second transport robot to travel out of the delivery position and then travel into the first temporary storage position for temporary storage.

In some embodiments, the determining whether any order case among order cases in the first sequence located between the current position and next position needs to use the first temporary storage position includes:
determining whether an order case repeats in the first sequence at next position that is at least one position apart from the current position.

In some embodiments, the controlling, if so, the second transport robot to travel out of the delivery position and then travel into an idle temporary storage position other than the first temporary storage position for temporary storage includes:
determining, from all idle temporary storage positions other than the first temporary storage position, a temporary storage position closest to the delivery position; and
controlling the second transport robot to travel out of the delivery position and then travel into the temporary storage position closest to the delivery position for temporary storage.

In some embodiments, after the controlling the second transport robot to travel out of the order case area, the method further includes:
controlling the second transport robot carrying the empty order case to travel into the order case area from the second station entry passage.

According to a fifth aspect of the embodiments of this application, a method for picking goods at a workstation is provided. The workstation includes an inventory case conveyor line, an order case area, and a picking position. The inventory case conveyor line has a goods-picking position. The order case area includes an order case station-entry passage, a delivery position, and an order case station-exit passage arranged in sequence, and further includes a plurality of temporary storage positions located between the order case station-entry passage and the order case station-exit passage. The order case station-entry passage is configured for a second transport robot to travel into the order case area and walk to the delivery position, the second transport robot carries an order case, and the order case is configured to receive goods picked from the inventory case. The plurality of temporary storage positions each are configured to temporarily store a second transport robot carrying a first-type order case, the first-type order case is an order case in which partial picked goods are stored, and a walking direction of the second transport robot temporarily stored in the temporary storage position is perpendicular to a walking direction of the second transport robot in the order case station-entry passage or the order case station-exit passage. The order case station-exit passage is configured for a second transport robot traveling out from the delivery position to travel out of the order case area or for the second transport robot traveling out from the delivery position to travel into the temporary storage position. The picking position is adjacent to a projection of the goods-picking position on a ground and the delivery position, and is configured to accommodate a picking person or to be provided with a picking device, so that the picking person or the picking device picks goods from an inventory case located at the goods-picking position and places the goods into an order case located at the delivery position.

The method includes:
obtaining an order task;
controlling the first transport robot to carry an inventory case corresponding to the order task to an inlet of the inventory case conveyor line, so that the inventory case conveyor line conveys the inventory case from the inlet to the goods-picking position, so as to provide the inventory case at the goods-picking position in a second sequence, where the inventory case is configured to store goods; controlling the first transport robot to walk to an outlet of the inventory case conveyor line after carrying the inventory case to the inlet;
controlling the second transport robot to carry an empty order case to the delivery position; controlling, after it is determined that to-be-picked goods in the inventory case are delivered to the order case, the inventory case conveyor line to convey the inventory case outputted from the goods-picking position to the outlet;
controlling the first transport robot to take out the inventory case located at the outlet and then travel out of the workstation, and determining whether picking required by the order task is completed;
controlling the second transport robot to travel out of the order case area if the picking required by the order task is completed; and
controlling, if the picking required by the order task is not completed, the second transport robot to enter an idle temporary storage position, and controlling the second transport robot to enter the order case station-entry passage from the temporary storage position based on a first sequence, so as to re-carry the order case to the delivery position, where the first sequence is determined based on the second sequence, so that the order case arriving at the delivery position matches the inventory case arriving at the goods-picking position.

According to a sixth aspect of the embodiments of this application, a computer-readable storage medium is provided, where the computer-readable storage medium has executable instruction stored therein, and the executable instructions, when run on an electronic device, cause the electronic device to perform the method for picking goods at a workstation according to any one of the embodiments described above.

The above description is only an overview of the technical solutions of this application. In order to more clearly understand the technical means of this application and implement the technical means in accordance with the content of the specification, and in order to make the above and other purposes, characteristics and advantages of this application more clear and easier to understand, specific embodiments of this application are listed below.

### BRIEF DESCRIPTION OF DRAWINGS

Various other advantages and benefits will become clear to a person of ordinary skill in the art by reading the following detailed description of preferred implementations. The drawings are merely used for showing the preferred implementations, and cannot be construed as a limitation on this application. Throughout the drawings, same reference numerals are used to represent same components. In the drawings:
FIG. 1 is a schematic planar diagram of a warehousing system according to an embodiment of this application;
FIG. 2 is a schematic planar diagram of a workstation according to an embodiment of this application;
FIG. 3 is a schematic planar diagram of another workstation according to an embodiment of this application;
FIG. 4 is a schematic planar diagram of still another workstation according to an embodiment of this application;
FIG. 5a to FIG. 5g are schematic diagrams of circulation during goods picking at a workstation;
FIG. 6a to FIG. 6d are schematic diagrams of a plurality of circulation modes of order cases after picking at a delivery position;
FIG. 7a to FIG. 7d show a plurality of scenarios where order cases enter a second station entry passage from a temporary storage position;
FIG. 8 is a schematic flowchart of a method for picking goods at a workstation according to an embodiment of this application;
FIG. 9a is a schematic structural diagram of yet another workstation according to an embodiment of this application;
FIG. 9b is a schematic planar diagram of yet another workstation according to an embodiment of this application;
FIG. 9c is a schematic structural diagram of an order case area of yet another workstation according to an embodiment of this application; and
FIG. 10 is a schematic flowchart of another method for picking goods at a workstation according to an embodiment of this application.

### Reference numerals:

1. Warehousing system; 10. Shelving unit; 20. First transport robot; 30. Second transport robot; 40. Workstation; 50. Server; 60. Ground; 21. Top holding member;
41. Inventory case area; 411. First station entry passage; 4111. First queue position; 412. Goods-picking position; 413. First station exit passage; 414. Standby passage; 4141. Standby position; 415. Standby goods-picking position; 42. Order case area; 421. Second station entry passage; 4211. Second queue position; 422. Delivery position; 423. Second station exit passage; 4231. Second station exit position; 424. Temporary storage position; 4241. First temporary storage position; 425. Standby delivery position; 43. Picking position; 44. Isolation portion; 441. First barrier; 442. Second barrier;
45. Inventory case conveyor line; 451. Inlet; 452. Outlet; 453. First conveyor line; 454. Second conveyor line; 455. Third conveyor line; 4531. First notch; 4541. Second notch.

### DETAILED DESCRIPTION

Embodiments of technical solutions of this application are described below in detail with reference to drawings. The following embodiments are merely used to describe the technical solutions of this application more clearly, and therefore are merely used as examples and cannot be used to limit the protection scope of this application.

Unless otherwise defined, meanings of all technical and scientific terms used herein are the same as those usually understood by a person skilled in the art. Terms used herein are merely used to describe the specific embodiments, and are not intended to limit this application. Terms "include", "have", and any variant thereof in the specification, the claims, and the above brief description of drawings of this application are intended to cover a non-exclusive inclusion.

In the description of the embodiments of this application, technical terms "first", "second", and the like are merely used to distinguish between different objects, and should not be understood as indicating or implying relative importance or implying a number, specific order, or primary-secondary relationship between indicated technical features. In the description of the embodiments of this application, "a plurality of" means two or more, unless otherwise explicitly and specifically defined.

"An embodiment" mentioned in the specification means that particular features, structures, or characteristics described with reference to the embodiment may be included in at least one embodiment of this application. The phrase appearing at various locations in this specification unnecessarily indicates a same embodiment or an independent or alternative embodiment exclusive to another embodiment. A person skilled in the art explicitly or implicitly understands that the embodiments described in this specification may be combined with other embodiments.

In the description of the embodiments of this application, a term "and/or" describes only an association relationship of associated objects, indicating any combination of listed objects. For example, "A and/or B" may represent the following three cases: only A exists, both A and B exist, and only B exists. In addition, a character "/" herein generally indicates an "or" relationship between the associated objects.

In the description of the embodiments of this application, a term "a plurality of" means two or more (including two). Similarly, "a plurality of groups" means two or more groups (including two groups), and "a plurality of pieces" means two or more pieces (including two pieces).

In the description of the embodiments of this application, orientation or position relationships indicated by technical terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of the description of the embodiments of this application, rather than indicating or implying that the mentioned device or element needs to have a particular orientation or be constructed and operated in a particular orientation. Therefore, such terms should not be construed as a limitation on the embodiments of this application.

In the description of the embodiments of this application, unless otherwise explicitly specified or defined, technical terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. A person of ordinary skill in the art may understand specific meanings of the above terms in the embodiments of this application based on a specific situation.

During piece picking of goods by using a traditional put wall workstation, a picking person needs to an inventory location on a put wall to which a piece of goods is to be delivered, which requires the picking person to walk by a long distance to deliver the goods. Moreover, the picking person needs to manually replace empty totes and full totes in the put wall, during which the picking person needs to pick up a scanner to scan the totes and put down the scanner a plurality of times. Therefore, this manner in the related art not only has poor performance in ergonomics and provides poor user experience for the picking person, but also results in low picking efficiency and is prone to delivery errors. In addition, because put wall workstation is inflexible, it cannot be expanded or moved at random in response to changes after being deployed, and it occupies a relatively large floor area.

To solve the above technical problems, the embodiments of this application provide a workstation, a warehousing system, a method for picking goods at a workstation, and a storage medium, which can improve picking efficiency and reduce picking errors.

Some implementations of this application are described in detail below in combination with the drawings. The following embodiments and features in the embodiments may be combined with each other in a case that no conflict occurs.

For ease of description, an XY coordinate axis is defined in the embodiments of this application, with an X axis being a first direction, a Y axis being a second direction. The X axis includes a positive direction of the X axis and a negative direction of the X axis. The Y axis includes a positive direction of the Y axis and a negative direction of the Y axis direction.

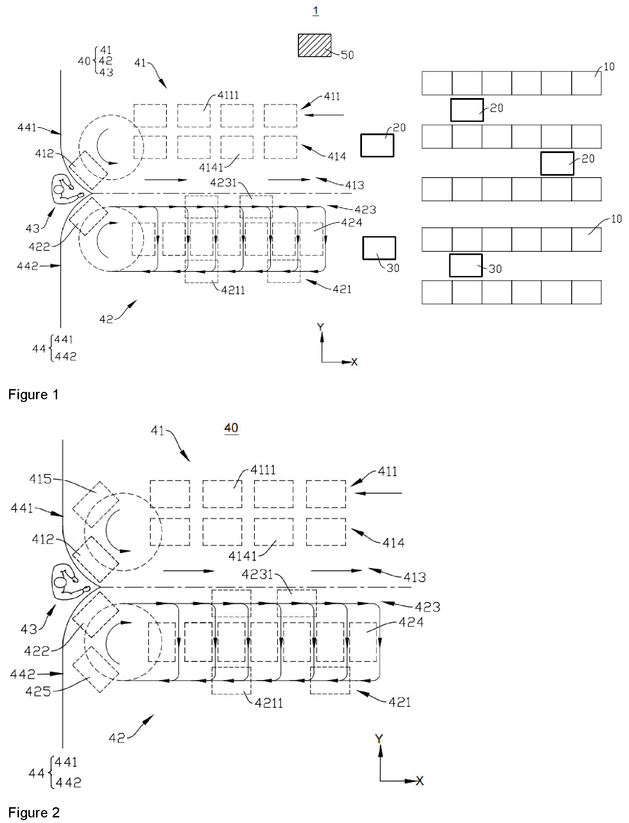

FIG. 1 is a schematic planar diagram of a warehousing system according to an embodiment of this application. As shown in FIG. 1, this embodiment of this application provides a warehousing system 1, which includes shelving unit 10, a first transport robot 20, a second transport robot 30, and a workstation 40 for goods picking.

The shelving unit 10 is configured to store an inventory case or an order case.

The inventory case has goods stored therein. The goods may be industrial parts, electronic components or products, medicine, clothing and accessories, foods, books, and the like. The first transport robot 20 is configured to carry an inventory case for which picking is to be performed (i.e., an inventory case hit by an order task) from the shelving unit 10 to the workstation 40, and carry the inventory case for which picking is performed from the workstation 40 to the shelving unit 10.

An order task is used to pick one or more types of goods. Each order task includes types and a quantity of to-be-picked goods. An inventory case corresponding to the order task is hit based on the type and the quantity of the goods in the order task. For example, an order task O1 is to pick 20 red pens, and an inventory case S1 including 100 red pens is hit by the order task O1. For another example, an order task O1 is to pick 20 red pens and 10 black pens, and an inventory case S1 including 100 red pens and an inventory case S2 including 200 black pens are hit by the order task O1.

The order case is configured to receive goods picked from the inventory case. The inventory case is hit by the order task, and the order case corresponding to the order task is configured to receive the goods picked from the inventory case corresponding to the order task. A single order case is configured to receive goods for a single order task. Inside of the order case may be divided into a plurality of partitions to place different types of goods separately. Certainly, the inside of the order case may not be divided, to place different types of goods together.

When an order task corresponding to an order case includes a plurality of types of goods, a plurality of rounds of picking are required to complete picking for the order case. For example, if an order task O1 corresponding to an order case A is to pick 20 red pens and 10 black pens, and an inventory case S1 including 100 red pens and an inventory case S2 including 200 black pens are hit by the order task O1, after 20 red pens are picked from the inventory case S1 at the workstation 40, the order case A includes only partial picked goods, and another round of picking needs to be performed on the inventory case S2 for 10 black pens at the workstation 40. In other words, picking for the order case A needs two rounds.

Based on this, in this embodiment of this application, order cases are classified into a first-type order case and a second-type order case. The second-type order case is an empty order case including no goods, and the first-type order case is an order case including partial picked goods. The second transport robot 30 is configured to carry the second-type order case from the shelving unit 10 to the workstation 40, and carry an order case on which picking required by the order task is completed out of the workstation 40. The order case on which picking required by the order task is completed may be directly carried out of the warehouse by the second transport robot 30, or may be carried by the second transport robot 30 to the shelving unit 10 for temporary storage and wait for another transport robot to carry the order case out of the warehouse from the shelving unit 10.

The first transport robot 20 and the second transport robot 30 may be lifting warehousing robots, which can pick and place a single case (an inventory case or an order case), have a small size, can operate rapidly, and needs low costs.

The warehousing system 1 further includes a server 50. The server 50 has scheduling system software installed therein, or may invoke scheduling system software on a cloud. The server can dispatch the first transport robot 20 and the second transport robot 30, and interact with the workstation 40 to transmit picking information and receive a picking completion status.

The workstation 40 in this embodiment of this application is further described below in combination with FIG. 1. Arrows in the figure indicate movement directions of the first transport robot 20 and the second transport robot 30. As shown in FIG. 1, the workstation 40 includes an inventory case area 41, an order case area 42, and a picking position 43. In the first direction X, the inventory case area 41 and the order case area 42 are located on a same side of the picking position 43. For example, as shown in the figure, the inventory case area 41 and the order case area 42 are both located on a right side of the picking position 43. Arranging the inventory case area 41 and the order case area 42 on the same side of the picking position 43 can save a space.

The inventory case area 41 includes a first station entry passage 411, a goods-picking position 412, and a first station exit passage 413 arranged in sequence, and further includes a standby passage 414 adjacent to the first station entry passage 411. The order case area 42 includes a second station entry passage 421, a delivery position 422, and a second station exit passage 423 arranged in sequence, and further includes a plurality of temporary storage positions 424 located between the second station entry passage 421 and the second station exit passage 423. The picking position 43 is adjacent to the goods-picking position 412 and the delivery position 422.

In the embodiment shown in FIG. 1, the first station entry passage 411, the standby passage 414, the first station exit passage 413, the second station entry passage 421, the plurality of temporary storage positions 424, and the second station exit passage 423 are all arranged in parallel along the first direction X. A station entry direction of the first station entry passage 411 (the negative direction of the X axis) is opposite to a station exit direction of the first station exit passage 413 (the positive direction of the X axis), and a station entry direction of the second station entry passage 421 (the negative direction of the X axis) is opposite to a station exit direction of the second station exit passage 423 (the positive direction of the X axis).

The first station entry passage 411 is configured for a first transport robot 20 traveling into the inventory case area 41 to walk to the goods-picking position 412. The first station entry passage 411 includes a plurality of first queue positions 4111. Each of the first queue positions 4111 can accommodate one inventory case for queuing. A sequence of inventory cases on the first station entry passage 411 is a second sequence. The standby passage 414 is configured for the first transport robot 20 traveling into the inventory case area 41 to stay and wait to move into the first station entry passage 411 when no idle first queue position 4111 exists on the first station entry passage 411. For example, the first station entry passage 411 includes four first queue positions 4111. If the four first queue positions 4111 are occupied from left to right by inventory cases S1, S2, S3, and S4, a transport robot carrying an inventory case S5, after traveling into the inventory case area 41, needs to stay at the standby passage 414 and wait for the inventory case S4 to move forward by one position before moving into the first station entry passage 411.

In some embodiments, the standby passage 414 is further configured for the first transport robot 20 on the first station entry passage 411 to move into to adjust the sequence of inventory cases on the first station entry passage 411. For example, a current sequence of inventory cases on the first station entry passage 411 is S1-S2-S3-S4 from left to right. If the sequence of inventory cases on the first station entry passage 411 needs to be adjusted to S1-S2-S4-S3, a first transport robot 20 carrying the inventory case S3 moves from the first station entry passage 411 into the standby passage 414 and waits for a first transport robot 20 carrying the inventory case S4 to move forward by one position. Then, the first transport robot 20 carrying the inventory case S3 re-enters the first station entry passage 411 from the standby passage 414. In this case, the sequence of the inventory cases on the first station entry passage 411 is S1-S2-S4-S3.

As shown in FIG. 1, the standby passage 414 is located between the first station entry passage 411 and the first station exit passage 413. Since the station entry direction of the first station entry passage 411 (the negative direction of the X -axis) is opposite to the station exit direction of the first station exit passage 413 (the positive direction of the X axis), the first transport robot 20 needs to turn when traveling from the first station entry passage 411 to the goods-picking position 412 and then from the goods-picking position 412 to the first station exit passage 413. Because the turning requires a space, a gap exists between the first station entry passage 411 and the first station exit passage 413. Arranging the standby passage 414 between the first station entry passage 411 and the first station exit passage 413 enables efficient utilization of the space between the station entry passage and the station exit passage. In some other embodiments, the standby passage 414 may be located on an other side of the first station entry passage 411, for example, located above the first station entry passage 411 shown in FIG. 1.

The second station entry passage 421 is configured for a second transport robot 30 traveling into the order case area 42 to walk to the delivery position 422.

The picking position 43 is configured to accommodate a picking person or to be provided with a picking device, so that the picking person or the picking device picks goods from an inventory case located at the goods-picking position 412 and places the goods into an order case located at the delivery position 422.

After picking from the inventory case is performed at the goods-picking position 412, a first transport robot 20 carrying the inventory case may travel out of the inventory case area 41. The first station exit passage 413 is configured for the first transport robot 20 traveling out from the goods-picking position 412 to travel out of the inventory case area 41.

After the picking person or picking device performs picking between the inventory case and the order case, if picking required by the order task corresponding to the order case is completed (goods of all types in the order task corresponding to the order case are picked), a second transport robot 30 carrying the order case may travel out of the order case area 42.

After the picking person or picking device performs picking between the inventory case and the order case, if picking required by the order task corresponding to the order case is not completed (goods of only partial types in the order task corresponding to the order case are picked), the order case is a first-type order case, and a second transport robot 30 carrying the order case may not travel out of the order case area 42. In this case, the second transport robot 30 may be temporarily stored in a temporary storage position 424.

The second station exit passage 423 is further configured for the second transport robot 30 traveling out from the delivery position 422 to travel into the temporary storage position 424. The plurality of temporary storage positions 424 each are configured to temporarily store a second transport robot 30 carrying the first-type order case. A walking direction of the second transport robot 30 temporarily stored in the temporary storage position 424 (the negative direction of the Y axis) is perpendicular to a walking direction of the second transport robot on the second station entry passage 421 or the second station exit passage 423 (the negative direction or the positive direction of the X axis). The second transport robot 30 temporarily stored in the temporary storage position 424 enters the second station entry passage 421 in a first sequence. The first sequence is determined based on the second sequence of inventory cases on the first station entry passage 411, so that order cases arriving at the delivery position 422 match inventory cases arriving at the goods-picking position 412.

In this embodiment of this application, the workstation 40 is divided into the inventory case area 41, the order case area 42, and the picking position 43. The first transport robot 20 carrying the inventory case enters the first station entry passage 411 of the inventory case area 41 in sequence to queue, and then carries the inventory case in sequence to the goods-picking position 412 of the inventory case area 41. Moreover, the second transport robot 30 carrying the order cases enters the second station entry passage 421 of the order case area 42 in sequence, and then carries the order case to the delivery position 422 of the order case area 42. The picking person or the picking device picks goods from the inventory case at the goods-picking position 412 and places the goods into the order case at the delivery position 422. An order case on which picking required by the order task is not fully completed is carried away from the delivery position 422 by the second transport robot 30, then enters the temporary storage position 424 in the order case area 42 for temporary storage and then enters the second station entry passage 421 in a first sequence. The first sequence is determined based on a second sequence of inventory cases on the first station entry passage 411, so that order cases re-arriving at the delivery position 422 match inventory cases arriving at the goods-picking position 412. Because the first transport robot 20 carries the inventory case to the goods-picking position 412 adjacent to the picking position 43, the second transport robot 30 carries the order case to the delivery position 422 adjacent to the picking position 43, and the second transport robot 30 implements temporary storage, sorting, and switching of the order case based on the sequence of the inventory cases on the first station entry passage 411, the inventory case arriving at the goods-picking position 412 matches the order case arriving at the delivery position 422, so that the picking person or the picking device can perform picking, thereby improving picking efficiency at the workstation 40, reducing labor intensity of the picking person, and reducing picking errors.

In addition, this embodiment of this application reduces a quantity of picking personnel, thereby reducing cost. The workstation 40 only requires area division on a ground (including the ground and support surfaces elevated from the ground) for defining various passages and positions, and a plurality of transport robots participate in picking to achieve flexible dispatching, so that the workstation 40 is more flexible, can be easily expanded and moved, and adapts well to structures and businesses of orders.

FIG. 2 is a schematic planar diagram of a workstation according to an embodiment of this application. As shown in FIG. 2, the inventory case area 41 further includes a standby goods-picking position 415 located upstream of the goods-picking position 412, and the standby goods-picking position 415 and the goods-picking position 412 are arranged in sequence along an arc-shaped path between the first station entry passage 411 and the first station exit passage 413. The order case area 42 further includes a standby delivery position 425 located upstream of the delivery position 422, and the standby delivery position 425 and the delivery position 422 are arranged in sequence along an arc-shaped path between the second station entry passage 421 and the second station exit passage 423.

Through arrangement of the standby goods-picking position 415 and the standby delivery position 425 and arrangement of both the standby goods-picking position 415 and the standby delivery position 425 along the arc-shaped path between the station entry passage and the station exit passage, not only a space for turning by the first transport robot 20 and the second transport robot 30 is properly utilized, but also order cases can be sorted by using the standby delivery position 425. During delivery for an order case currently located at the delivery position 422, a next order case may wait at the standby delivery position 425. After the order case currently located at the delivery position 422 leaves the delivery position 422, the order case at the standby delivery position 425 may directly move into the delivery position 422 for picking, which spends less time and has higher picking efficiency compared with entering the delivery position 422 from the second station entry passage 421.

In some embodiments, the first station entry passage 411 includes a plurality of first queue positions 4111, and the standby passage 414 includes a plurality of standby positions 4141. The goods-picking position 412, each of the first queue positions 4111, and each of the standby positions 4141 each may be provided with an identification element. The identification element is configured to be identified by the first transport robot 20 to achieve positioning of the first transport robot 20. The second station entry passage 421 includes a plurality of second queue positions 4211 (not completely shown in the figure), and the second station exit passage 423 includes a plurality of second station exit positions 4231 (not completely shown in the figure). The delivery position 422, each of the second queue positions 4211, each of the second station exit positions 4231, and each of the temporary storage positions 424 each may be provided with an identification element. The identification element is configured to be identified by the second transport robot 30 to achieve positioning of the second transport robot 30.

The identification element may be arranged on the ground. The identification element may be an element which may be identified by the transport robot for positioning, such as a QR code, a barcode, or an electronic tag (e.g., an RFID tag). For example, each identification element may be configured to indicate X and Y coordinates thereof in a horizontal coordinate system, or each identification element may be configured to indicate an identification code of a position at which the identification element is arranged (e.g., identification codes of the first queue positions 4111 may be 101, 102, 103, and 104 in sequence in the negative direction of the X axis, and identification codes of the standby position 4141 may be 201, 202, 203, and 204 in sequence in the negative direction of the X axis).

The workstation 40 further includes an isolation portion 44. The isolation portion 44 is arranged between the inventory case area 41 and the picking position 43, and between the order case area 42 and the picking position 43. The isolation portion 44 is arranged to isolate a picking person from a transport robot, so as to prevent the transport robot from colliding with and injuring the picking person.

The isolation portion 44 includes a first barrier 441 and a second barrier 442. The first barrier 441 is located between the inventory case area 41 and the picking position 43, and the second barrier 442 is located between the order case area 42 and the picking position 43. The first barrier 441 and the second barrier 442 may be separately fabricated and then connected into one piece, or a gap may exist between the two, as long as each can achieve isolation between the transport robot and the picking person walking in respective areas. Separately arranging the barriers for the inventory case area 41 and the order case area 42 facilitates both manufacturing and on-site mounting of the isolation portion 44 compared to arranging a single complete isolation portion 44.

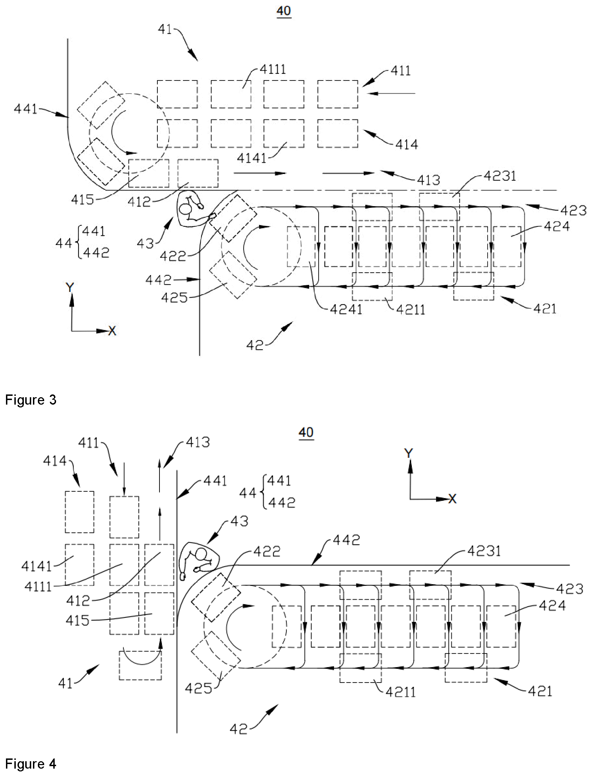

FIG. 3 is a schematic planar diagram of another workstation according to an embodiment of this application. As shown in FIG. 3, similar to the embodiments described in FIG. 1 and FIG. 2, the order case area 42 further includes a standby delivery position 425 located upstream of the delivery position 422, and the standby delivery position 425 and the delivery position 422 are arranged in sequence along an arc-shaped path between the second station entry passage 421 and the second station exit passage 423.

The inventory case area 41 further includes a standby goods-picking position 415 located upstream of the goods-picking position 412. A difference from FIG. 1 and FIG. 2 may be that the standby goods-picking position 415, the goods-picking position 412, and the first station exit passage 413 are arranged in sequence along the station exit direction of the first station exit passage 413 (the positive direction of the X axis).

In this embodiment, the standby goods-picking position 415 in the inventory case area 41 is not located on an arc-shaped path of a walking path of the first transport robot 20, but instead on a straight segment of the walking path of the first transport robot 20. In A process of moving the inventory case from the standby goods-picking position 415 to the goods-picking position 412, the first transport robot 20 walks along a straight line. Since the first transport robot 20 needs to overcome a larger centrifugal force when walking along an arc-shaped line, the first transport robot 20 moving along a straight line from the standby goods-picking position 415 to the goods-picking position 412 needs a shorter time. Further, the picking operation includes grasping the goods and delivering the goods. Grasping the goods requires is not performed before the inventory case arrives at the goods-picking position 412. Because the time required for moving the inventory case from the standby goods-picking position 415 to the goods-picking position 412 is reduced, picking efficiency can be further improved.

In addition, in this embodiment, the standby goods-picking position 415 and the goods-picking position 412 are arranged along a straight line on a side of the picking person, and an armspan of the picking person can cover the standby goods-picking position 415. Therefore, for goods that can be easily picked, the picking person may begin to grasp the goods while the first transport robot 20 walks from the standby goods-picking position 415 to the goods-picking position 412, so as to further improve the picking efficiency.

FIG. 4 is a schematic planar diagram of still another workstation according to an embodiment of this application. As shown in FIG. 4, the first station entry passage 411, the standby passage 414, and the first station exit passage 413 are all arranged in parallel along a second direction Y. The station entry direction of the first station entry passage 411 (the negative direction of the Y axis) is opposite to the station exit direction of the first station exit passage 413 (the positive direction of the Y axis). The second station entry passage 421, the plurality of temporary storage positions 424, and the second station exit passage 423 are all arranged in parallel along the first direction X. The station entry direction of the second station entry passage 421 (the negative direction of the X axis) is opposite to the station exit direction of the second station exit passage 423 (the positive direction of the X axis). In the first direction X, the inventory case area 41 and the order case area 42 are located on two sides of the picking position 43.

In this embodiment, the inventory case area 41 is located on a left side of the picking position 43, and the first transport robot 20 moves only on the left side of the picking position 43. The order case area 42 is located on a right side of the picking position 43, and the second transport robot 30 moves only on the right side of the picking position 43. Walking paths of the first transport robot 20 and the second transport robot 30 do not intersect, so as to avoid a reduction in a throughout as a result of the first transport robot 20 and the second transport robot 30 needing to giving way to each other when entering or exiting the workstation 40 due to overlapping between the paths that easily occurs, thereby satisfying a demand of a high-throughput scenario.

Similar to the embodiment shown in FIG. 3, in this embodiment, the standby goods-picking position 415 in the inventory case area 41 is not located on an arc-shaped path of a walking path of the first transport robot 20, but instead on a straight segment of the walking path of the first transport robot 20.

The quantities of the first queue positions 4111, the standby positions 4141, the second queue positions 4211, the second station exit positions 4231, and the temporary storage positions 424 shown in the above figures are merely examples. The quantities of these positions may alternatively be other quantities, which are not limited in this application. More temporary storage positions 424 indicate more second transport robots 30 that may be accommodated in the order case area 42 and a lower the process interruption rate of the workstation 40. However, an excessively large quantity of temporary storage positions 424 may cause inconvenience in subsequent scheduling. Preferably, seven temporary storage positions 424 are arranged.

A correspondence among order tasks, inventory cases, and order cases is described below.

After the server 50 of the warehousing system 1 obtains an order task, the server controls the first transport robots 20 to carry inventory cases corresponding to the order task to the inventory case area 41. The inventory cases are on the first station entry passage 411 in a second sequence, and the inventory cases arrive at the goods-picking position 412 in sequence of the second sequence. The server 50 further controls the second transport robots 30 to carry empty order cases to the delivery position 422. Before arriving at the delivery position 422, an empty order case is not bound to any order task. The second transport robots 30 may carry any empty order case to the delivery position 422. When the empty order case arrives the delivery position 422 for the first time, the empty order case is bound to an order task corresponding to an inventory case arriving substantially simultaneously at the goods-picking position 412 as the order case, that is, the order case has a corresponding order task. For one order task, one or more types of goods may need to be picked. Therefore, one order task may correspond to one or more inventory cases. After being bound to an order task, an empty order case needs to receive goods from one or more inventory cases. If an order case needs to receive goods from a plurality of inventory cases, before the order case receives all goods required for an order task (i.e., before the order task is completed), after each picking operation for the order task, the server 50 needs to control, in a sequence in which subsequent inventory cases arrive at the goods-picking position 412, the order case to be temporarily stored at the temporary storage position 424 and re-arrive at the delivery position 422 to complete delivery of remaining goods.

For example, the server 50 receives order tasks O1, O2 and O3, which include goods G1, G2, G3, G4 and G5, the order task O1 includes the goods G1 and G2, the order task O2 includes the goods G3, and the order task O3 includes the goods G4 and G5. A plurality of first transport robots 20 respectively carry inventory cases (for example, S1, S2, S3, S4, and S5, which provide goods G1, G2, G3, G4, and G5 respectively) corresponding to the goods required for all of the order tasks in sequence to the goods-picking position 412. A plurality of second transport robots 30 successively transport empty order cases to the delivery position 422. A first empty order case A, after arriving at the delivery position 422, is bound to the order task O1 corresponding to the inventory case S1 that simultaneously arrives at the goods-picking position 412. The order case A needs to receive the goods G1 and G2, which correspond to the inventory cases S1 and S2. After the order case A has completes the reception of the goods from the inventory case S1, picking required by the order task O1 corresponding to the order case A is still not completed (the goods G2 need to be further picked). Therefore, the order case A is a first-type order case. The server 50 needs to determine, based on a sequence at which the inventory case S2 arrives at the goods-picking position 412, a sequence at which the order case A needs to re-arrive at the delivery position 422, and controls the order case A to circulate based on the sequence at which the order case A needs to re-arrive at the delivery position 422. If the inventory case arriving at the goods-picking position 412 simultaneously with the empty order case A arriving at the delivery position 422 for the first time corresponds to an order task that includes only one type of goods, for example, the order task O2 (corresponding only to the inventory case S3), the empty order case A may directly travel out of the order case area 42 after completing reception of the goods from the inventory case S3.

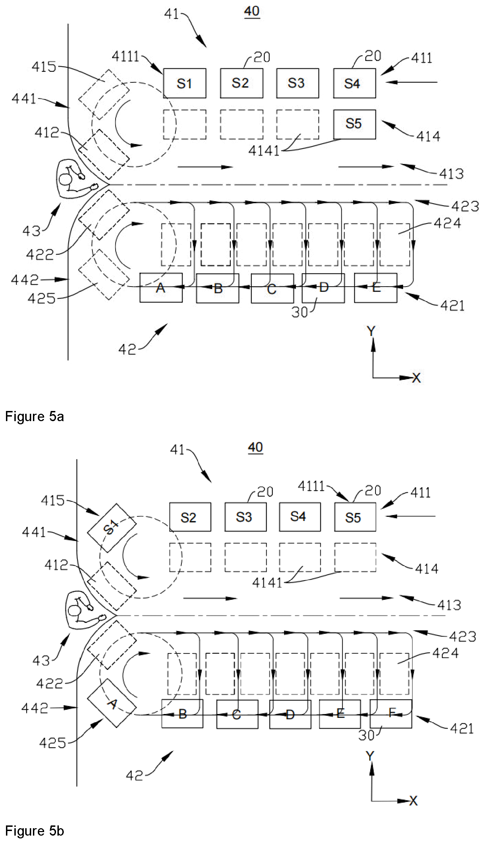

FIG. 5a to FIG. 5g are schematic diagrams of circulation during goods picking at a workstation. A process of goods picking at the workstation 40 is described below with reference to FIG. 5a to FIG. 5g. In FIG. 5a to FIG. 5g, the workstation 40 shown in FIG. 2 is used as an example for describing the process of goods picking at the workstation 40. Processes of goods picking at the workstation 40 in other embodiments of this application are similar, which are not described one by one. In the figures, for convenience of illustration, the first transport robot 20 and the second transport robot 30 are labeled with codes of inventory cases or order cases carried by them (for example, an inventory case S1/S2/S3/S4 and an order case A/B/C/D). As shown in FIG. 5a, a plurality of first transport robots 20 carrying inventory cases (for convenience of illustration, only some first transport robots 20 are labeled, and not all first transport robots are labeled) successively enter the first station entry passage 411, and a plurality of second transport robots 30 carrying order cases (for convenience of illustration, only some second transport robots 30 are labeled, and not all second transport robots are labeled) successively enter the second station entry passage 421. Four first queue positions 4111 of the first station entry passage 411 are all occupied by the first transport robots 20, that is, there is no idle first queue position 4111. In this case, another first transport robot 20 carrying the inventory case S5 that enters the inventory case area 41 stays at the standby position 4141 in the standby passage 414.

As for a sequence of the second transport robots 30 on the second station entry passage 421, since a sequence exists for the inventory cases arriving at the goods-picking position 412, and each inventory case corresponds to at least one order case, an order case sequence may be generated based on the inventory case sequence.

In some embodiments, the scheduling system software may predict a sequence in which a plurality of inventory cases arrive at the workstation 40 in the future, which is the inventory case sequence (e.g., S1-S2-S3-S4-S5). The order case sequence (e.g., A-B-C-D-E) needs to match the sequence of the inventory cases (e.g., an order task corresponding to the order case A hits the inventory case S1, an order task corresponding to the order case B hits the inventory case S2, and so on), so that the order cases arriving at the delivery position 422 match the inventory cases arriving at the goods-picking position 412. Therefore, by predicting the sequence in which the inventory cases arrive at the workstation 40, the scheduling system software determines the second sequence of the inventory cases on the first station entry passage 411 based on the sequence in which the inventory cases arrive at the workstation 40, and then determines the first sequence in which the second transport robots 30 enter the second station entry passage 421, i.e., the sequence of the second transport robots 30 on the second station entry passage 421, based on the second sequence.

In some other embodiments, when the scheduling system software cannot predict the sequence in which the inventory cases arrive at the workstation 40 in the future, the inventory case sequence may be directly determined based on the sequence of the inventory cases on the first station entry passage 411. Specifically, the scheduling system software obtains the positions of the first transport robots 20 on the first station entry passage 411, determines the second sequence of the inventory cases on the first station entry passage 411 based on the positions of the first transport robots 20 on the first station entry passage 411, and determines the first sequence in which the second transport robots 30 enter the second station entry passage 421 based on the second sequence. For example, if the scheduling system software determines, based on the positions of the first transport robots 20 on the first station entry passage 411, that the second sequence of the inventory cases on the first station entry passage 411 is S1-S2-S4-S5-S3, it is determined that the first sequence in which the second transport robots 30 enter the second station entry passage 421 is A-B-D-E-C. The order task corresponding to the order case A hits the inventory case S1, the order task corresponding to the order case B hits the inventory case S2, the order task corresponding to the order case D hits the inventory case S4, the order task corresponding to the order case E hits the inventory case S5, and the order task corresponding to the order case C hits the inventory case S3.

As shown in FIG. 5b, a first transport robot 20 carrying the inventory case S1 arrives at the standby goods-picking position 415, following first transport robots 20 move forward in sequence by one position, and a first transport robot 20 carrying the inventory case S5 moves into a last first queue position 4111 of the first station entry passage 411. Similarly, a second transport robot 30 carrying the order case A arrives at the standby delivery position 425.

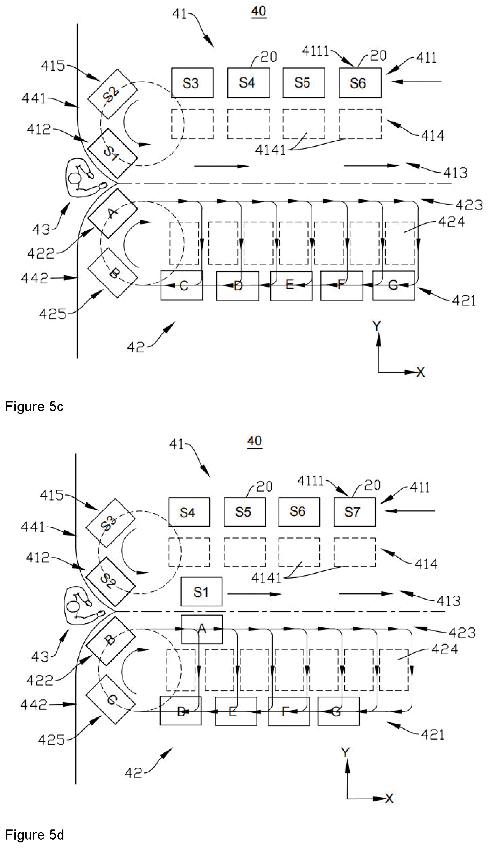

As shown in FIG. 5c, the first transport robot 20 carrying the inventory case S1 arrives at the goods-picking position 412, and a first transport robot 20 carrying the inventory case S2 arrives at the standby goods-picking position 415. Similarly, the second transport robot 30 carrying the order case A arrives at the delivery position 422, and a second transport robot 30 carrying the order case B arrives at the standby delivery position 425.

As shown in FIG. 5d, after the picking person performs picking on the inventory case S1 and the order case A at the picking position 43, the first transport robot 20 carrying the inventory case S1 travels out from the goods-picking position 412 and enters the first station exit passage 413, and then directly flows out of the workstation 40 through the first station exit passage 413. The second transport robot 30 carrying the order case A travels out from the delivery position 422 and enters the second station exit passage 423.

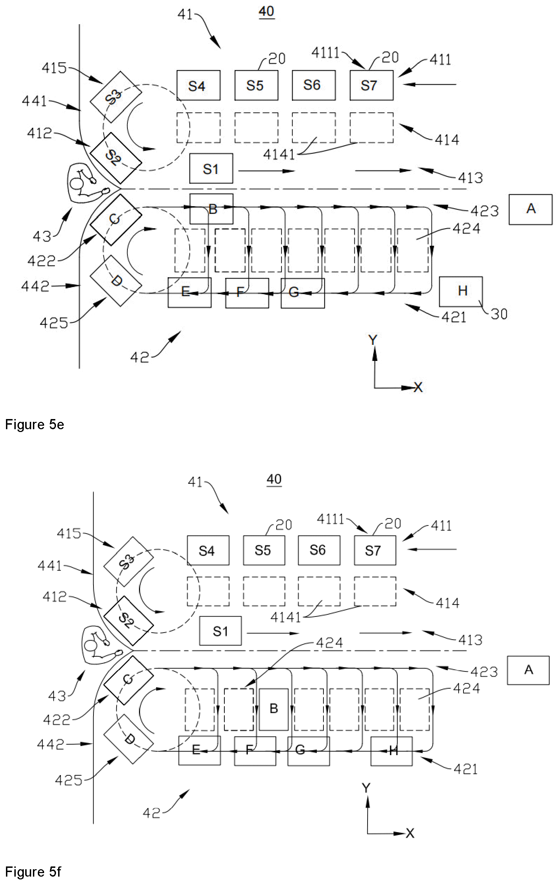

As shown in FIG. 5e, since the picking required by the order task corresponding to the order case A is completed, the second transport robot 30 carrying the order case A flows out of the workstation 40 through the second station exit passage 423, while a second transport robot 30 carrying an empty order case H is caused to flow in through the second station entry passage 421, so as to always maintain a plurality of order cases circulating in the workstation 40.

As shown in FIG. 5f, picking required by the order case is not fully completed after the current picking for the order case B at the delivery position 422, and therefore the order case is a first-type order case and needs second picking. The second transport robot 30 carrying the order case B travels out from the delivery position 422 and enters an idle temporary storage position 424 for temporary storage.

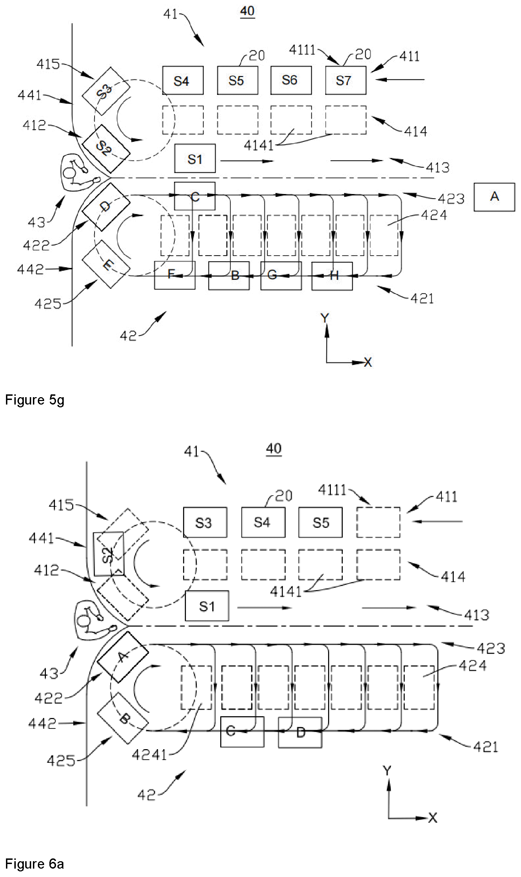

As shown in FIG. 5g, when it is determined based on the first sequence that the second transport robot 30 carrying the order case B needs to enter the second station entry passage 421, the second transport robot 30 moves from the temporary storage position 424 into the second station entry passage 421, and then the second picking for the order case B is performed with reference to the foregoing process. After the second picking, it is further determined whether third picking is needed, and then it is determined whether the order case B may exit the workstation (as shown in FIG. 5e) or needs to re-enter the idle temporary storage position 424 for temporary storage (for example, as shown in FIG. 5f).

For an order case that needs second picking, when the order case area 42 further includes a standby delivery position 425, the order case may alternatively be temporarily stored in the standby delivery position 425 to wait for second picking in addition to being temporarily stored in the temporary storage position 424. Circulation of an order case after picking at the delivery position 422 is described below.

FIG. 6a to FIG. 6d are schematic diagrams of a plurality circulation modes of order cases after picking at the delivery position 422; As shown in the figures, a temporary storage position 424 among a plurality of temporary storage positions 424 closest to the delivery position 422 is a first temporary storage position 4241. The standby delivery position 425, the delivery position 422, and the first temporary storage position 4241 are arranged in sequence along a roundabout path. Such an arrangement facilitates sequencing of order cases. An order case for which not all types of goods are picked after picking may move back to the delivery position 422 or the standby delivery position 425 through the roundabout based on a sequence of subsequent inventory cases, or may enter an idle temporary storage position 424 among the temporary storage positions 424 through the second station exit passage 423.

As shown in FIG. 6a, an order case sequence A-A-B-C-D is determined based on an inventory case sequence S1-S2-S3-S4-S5 (goods in both the inventory cases S1 and S2 are goods of an order task corresponding to the order case A). To be specific, when a picking process is completed for the order case A, because a next position of the order case A in the order case sequence is adjacent to a current position thereof, a first transport robot 20 carrying the order case A remains at the delivery position 422, and only a first transport robots 20 carrying an inventory case circulates. After a first transport robot 20 carrying the inventory case S2 arrives at the goods-picking position 412, second picking required by the order task corresponding to the order case A is performed.

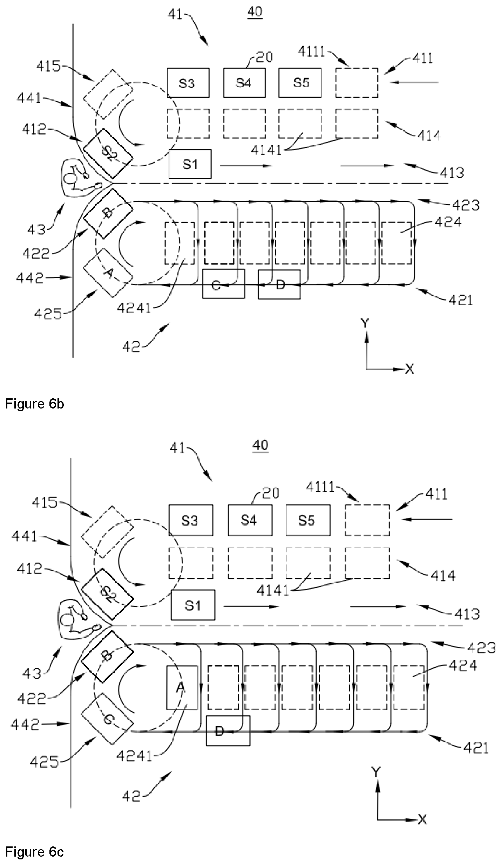

As shown in FIG. 6b, an order case sequence A-B-A-C-D is determined based on an inventory case sequence S1-S2-S3-S4-S5 (goods in both the inventory cases S1 and S3 are goods of an order task corresponding to the order case A). To be specific, when a picking process is completed for the order case A, since a next position of the order case A in the order case sequence is one position apart from a current position thereof, a first transport robot 20 carrying the order case A circulates to the standby delivery position 425 through a roundabout (before which a second transport robot 30 carrying the order case B enters the delivery position 422 from the standby delivery position 425), waiting for second picking required by the order task corresponding to the order case A.

As shown in FIG. 6c, an order case sequence A-B-C-A-D is determined based on an inventory case sequence S1-S2-S3-S4-S5 (goods in both the inventory cases S1 and S4 are goods of an order task corresponding to the order case A). To be specific, when a picking process is completed for the order case A, since a next position of the order case A in the order case sequence is two positions apart from a current position thereof, a first transport robot 20 carrying the order case A circulates to the first temporary storage position 4241 through a roundabout (before which a second transport robot 30 carrying the order case B enters the delivery position 422 from the standby delivery position 425 and a second transport robot 30 carrying the order case C enters the standby delivery position 425), waiting for second picking required by the order task corresponding to the order case A.

In a preferred embodiment, when the order case A further corresponds to an N^{th} inventory case after a picking process is performed and no other order case needs to occupy the first temporary storage position 4241 before the order case is re-delivered, the second transport robot 30 carrying the order case may enter the first temporary storage position 4241 to prepare for a next picking process, as shown in FIG. 6c. N is a positive integer and N ≥ 5. In other words, a next position of the order case A in the first sequence is at least three positions apart from a current position thereof.

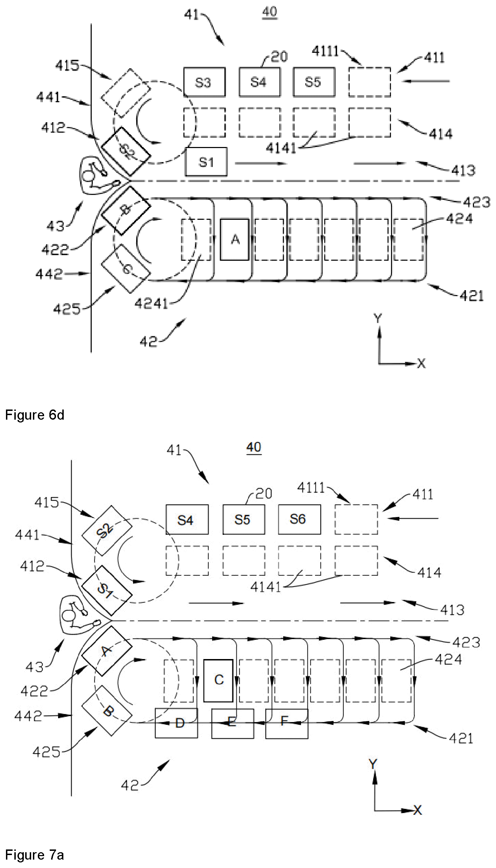

As shown in FIG. 6d, an order case sequence A-B-C-B-A is determined based on an inventory case sequence S1-S2-S3-S4-S5 (goods in both the inventory cases S1 and S5 are goods of an order task corresponding to the order case A, and goods in both the inventory cases S2 and S4 are goods of an order task corresponding to the order case B). To be specific, when a picking process is completed for the order case A, a next position of the order case A in the first sequence is three positions apart from a current position thereof, and after a first picking process is completed for the order case B, the order case needs to enter the standby delivery position 425 through the first temporary storage position 4241 and wait for second picking (the order case B is an order case in the order case sequence that repeats at a position at least one position apart from a current position of the order case A). The second picking for the order case A follows the second picking of the order case B in the order case sequence, which means that the first temporary storage position 4241 is reserved for the order case B which is more urgent. Therefore, the first transport robot 20 carrying the order case A enters one of the idle temporary storage positions 424 for temporary storage based on urgency of moving back to the delivery position 422 again and availability of the temporary storage positions 424, and reenters the second station entry passage 421 for queuing when a sequencing condition is satisfied. For selection of an idle temporary storage position 424 based on urgency of moving back to the delivery position 422 of an order case, a further front order case in the order case sequence in terms of time has higher urgency, for which a front idle temporary storage position 424 may be selected. In some embodiments, a temporary storage position 424 among idle temporary storage positions 424 closest to the delivery position 422 may be selected for temporary storage, to shorten a path and a time required for the order case to arrive at the delivery position 422.

How an order case enters the second station entry passage 421 from the temporary storage position 424 is described below (as shown in the scenario in FIG. 5f). FIG. 7a to FIG. 7d show a plurality of scenarios where order cases enter the second station entry passage 421 from the temporary storage position 424.

First, a spatial relationship between order cases in an order case sequence is described. A path for an order case to move from a position in the order case area 42 to the delivery position 422 is relatively fixed. For example, to leave the delivery position 422 and then move back to the delivery position 422, an order case needs a path of first temporary storage position 4241-standby delivery position 425-delivery position 422, or needs a path of second station exit passage 423-idle temporary storage position 424-second station entry passage 421-standby delivery position 425-delivery position 422. A shorter path from a current position of an order case to the delivery position 422 indicates a further front position of the order case in terms of space.

As shown in FIG. 7a, a current order case sequence is A-B-D-E-F. An order case C does not appear in the current order case sequence, and therefore the order case C is temporarily stored in a temporary storage position 424.

After the order case C appears in a current order case sequence, the scheduling system software detects whether an order case is in front of the order case C in terms of time.

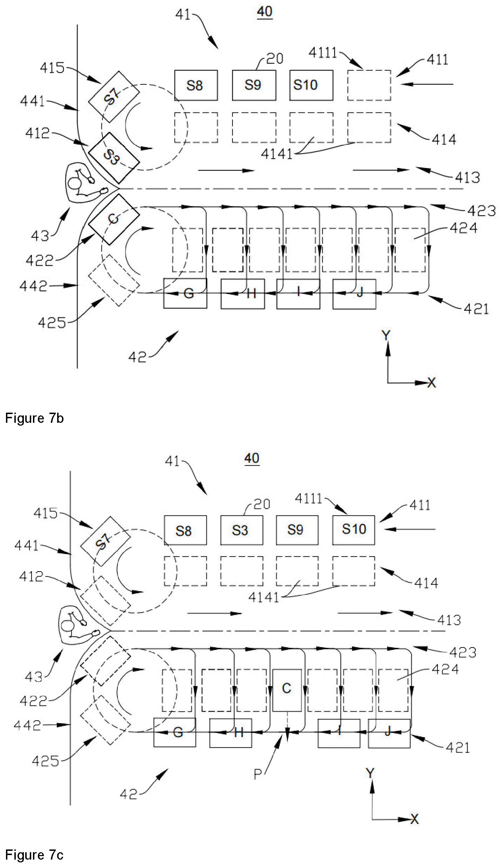

As shown in FIG. 7b, a current order case sequence is C-G-H-I-J, in which no order case is in front of the order case C in terms of time. Therefore, the scheduling system software schedules a second transport robot 30 carrying the order case C to directly move to the delivery position 422 for picking.

As shown in FIG. 7c, a current order case sequence is G-H-C-I-J, in which the order cases G and H are in front of the order case C in terms of time. Therefore, the scheduling system software detects whether the order cases G and H are in front of the order case C in terms of space. Since the order cases G and H are in front of the order case C in terms of space, the second transport robot 30 carrying the order case C is scheduled to leave the temporary storage position 424 and queue behind the order cases G and H.

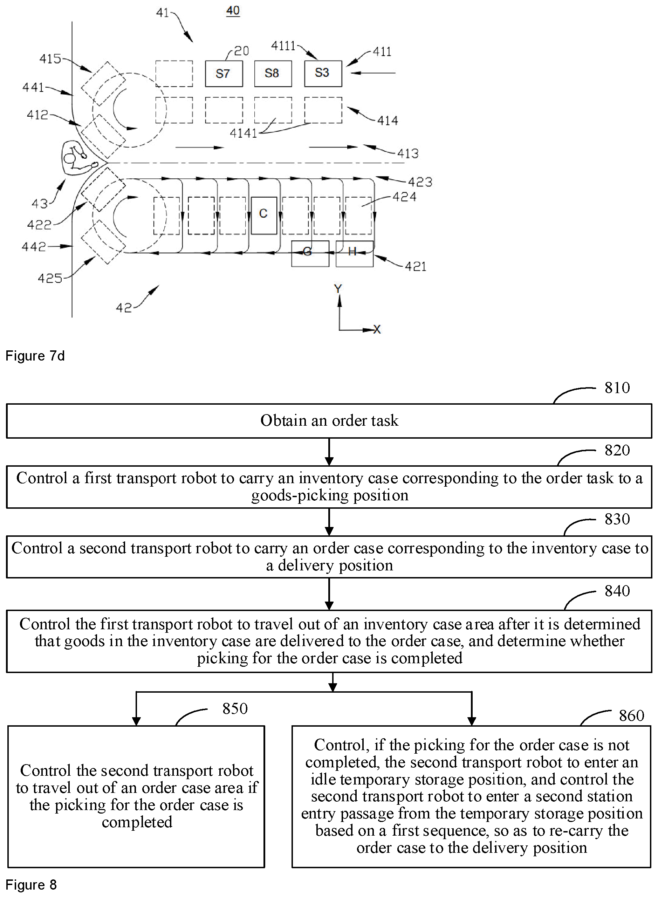

As shown in FIG. 7d, a current order case sequence is G-H-C-I-J, in which the order cases G and H are behind the order case C in terms of space. Therefore, the order case C is first temporarily stored at a temporary storage position 424, and only when the order cases G and H are in front of the order case C in terms of space (for example, the state shown in FIG. 7c), a second transport robot 30 carrying the order case C is scheduled to move from the temporary storage position 424 into the second station entry passage 421 for queuing.

In some embodiments, it may be determined that the first order case carried by the second transport robot 30 temporarily stored at the temporary storage position 424 is at a first position in the first sequence, and a second position P on the second station entry passage 421 that is in parallel with the temporary storage position 424 in the second direction Y is determined (as shown in FIG. 7c). After the second transport robot 30 moves from the temporary storage position 424 into the second station entry passage 421, the second transport robot is exactly located at the second position P. If a second transport robot 30 carrying an order case that is behind the first position in the first sequence enters the second station entry passage 421, the second transport robot 30 carrying the order case behind the first position in the first sequence needs to be controlled to wait upstream of the second position P on the second station entry passage 421 (for example, positions of I and J in FIG. 7c). It is determined whether all order cases located before the first position in the first sequence are on the second station entry passage 421 and are located downstream of the second position P on the second station entry passage 421 (for example, in FIG. 7a to FIG. 7c, a left side of the second station entry passage 421 is downstream, and a right side is upstream). If so, the second transport robot 30 is controlled to move from the temporary storage position 424 to the second position P on the second station entry passage 421. Through determining of whether all of the order cases before the first position (for example, in an order case sequence G-H-C-I-J, order cases before the first position of the order case C are G and H) are on the second station entry passage 421 and are located downstream of the second position P on the second station entry passage 421, it is determined whether the order cases in the order case sequence that are in front of the order case carried by the second transport robot 30 in terms of time are in front of the order case in terms of space. If all of the order cases in the first sequence located before the first position are on the second station entry passage 421 and are located downstream of the second position P on the second station entry passage 421, the second transport robot 30 is controlled to move into the second station entry passage 421.

FIG. 8 is a schematic flowchart of a method for picking goods at a workstation 40 according to an embodiment of this application. The method is applied to a server 50 in a warehousing system 1. The workstation 40 includes an inventory case area 41, an order case area 42, and a picking position 43. The inventory case area 41 includes a first station entry passage 411, a goods-picking position 412, and a first station exit passage 413 arranged in sequence, and further includes a standby passage 414 adjacent to the first station entry passage 411. The first station entry passage 411 is configured for a first transport robot 20 traveling into the inventory case area 41 to walk to the goods-picking position 412, and the first transport robot 20 carries an inventory case in which goods are stored. The standby passage 414 is configured for the first transport robot 20 traveling into the inventory case area 41 to stay and wait to move into the first station entry passage 411 when no idle queue position exists on the first station entry passage 411. The first station exit passage 413 is configured for the first transport robot 20 traveling out from the goods-picking position 412 to travel out of the inventory case area 41. The order case area 42 includes a second station entry passage 421, a delivery position 422, and a second station exit passage 423 arranged in sequence, and further includes a plurality of temporary storage positions 424 located between the second station entry passage 421 and the second station exit passage 423. The second station entry passage 421 is configured for a second transport robot 30 traveling into the order case area 42 to walk to the delivery position 422, the second transport robot 30 carries an order case, and the order case is configured to receive goods picked from the inventory case. The plurality of temporary storage positions 424 each are configured to temporarily store a second transport robot 30 carrying a first-type order case, the first-type order case is an order case in which partial picked goods are stored, and a walking direction of the second transport robot 30 temporarily stored in a temporary storage position 424 is perpendicular to a walking direction of the second transport robot 30 on the second station entry passage 421 or the second station exit passage 423. The second station exit passage 423 is configured for the second transport robot 30 traveling out from the delivery position 422 to travel out of the order case area 42 or for the second transport robot 30 traveling out from the delivery position 422 to travel into the temporary storage position 424. The picking position 43 is adjacent to the goods-picking position 412 and the delivery position 422, and is configured to accommodate a picking person or to be provided with a picking device, so that the picking person or the picking device picks goods from an inventory case located at the goods-picking position 412 and places the goods into an order case located at the delivery position 422. The workstation 40 may be the workstation 40 in any one of the embodiments shown in FIG. 1 to FIG. 7d.

As shown in FIG. 8, the method includes the following steps:
Step 810: Obtain an order task.
Step 820: Control the first transport robot to carry an inventory case corresponding to the order task to the goods-picking position.
Step 830: Control the second transport robot to carry an empty order case to the delivery position.
Step 840: Control the first transport robot to travel out of the inventory case area after it is determined that to-be-picked goods in the inventory case are delivered to the order case, and determine whether picking required by the order task is completed.
Step 850: Control the second transport robot to travel out of the order case area if the picking required by the order task is completed.
Step 860: Control, if the picking required by the order task is not completed, the second transport robot to enter an idle temporary storage position, and control the second transport robot to enter the second station entry passage from the temporary storage position based on a first sequence, so as to re-carry the order case to the delivery position.

The plurality of temporary storage positions are configured to temporarily store order cases on which picking required by an order task is not completed, a second transport robot temporarily stored in the temporary storage position enters the second station entry passage in a first sequence, and the first sequence is determined based on a second sequence of inventory cases on the first station entry passage, so that the order case arriving at the delivery position matches the inventory case arriving at the goods-picking position.

In some embodiments, the method further includes:
predicting a sequence in which the inventory cases arrive at the workstation, determining the second sequence of the inventory cases on the first station entry passage based on the sequence in which the inventory cases arrive at the workstation, and determining the first sequence based on the second sequence; or
obtaining a position of the first transport robot on the first station entry passage, determining the second sequence of the inventory cases on the first station entry passage based on the position, and determining the first sequence based on the second sequence.

In some embodiments, the controlling the second transport robot to enter the second station entry passage from the temporary storage position based on a first sequence includes:
determining a first position of the order case carried by the second transport robot temporarily stored at the temporary storage position in the first sequence, and determining a second position of the second transport robot on the second station entry passage, where the second position is a position parallel with the temporary storage position in the second direction;
determining whether all order cases before the first position in the first sequence are on the second station entry passage and located downstream of the second position on the second station entry passage; and
controlling, if so, the second transport robot to move from the temporary storage position to the second position on the second station entry passage.

In some embodiments, the controlling the second transport robot to enter the second station entry passage from the temporary storage position based on a first sequence includes:
determining whether paths for all order cases in the first sequence located before the order case to arrive at the delivery position are shorter than a path for the order case to arrive at the delivery position;
controlling, if so, the second transport robot to move from the temporary storage position into the second station entry passage, so that a position of the order case on the second station entry passage conforms to the first sequence; and
controlling, if not, the second transport robot to remain in the temporary storage position until the paths for all of the order cases in the first sequence located before the order case to arrive at the delivery position are shorter than the path for the order case to arrive at the delivery position, and controlling the second transport robot to move from the temporary storage position into the second station entry passage, so that the position of the order case on the second station entry passage conforms to the first sequence.

In some embodiments, if the picking required by the order task is not completed, the method further includes:
determining a relationship between a next position and a current position of the order case in the first sequence; and
if the next position of the order case in the first sequence is adjacent to the current position,
controlling the second transport robot to remain in the delivery position to wait for a next inventory case to arrive at the goods-picking position for further picking.

In some embodiments, the order case area further includes a standby delivery position located upstream of the delivery position.

If the picking required by the order task is not completed, the method further includes:
determining a relationship between a next position and a current position of the order case in the first sequence; and
controlling, if one position exists between the next position and the current position of the order case in the first sequence, the second transport robot to travel out of the delivery position and travel into the standby delivery position to wait after a second transport robot located at the standby delivery position travels into the delivery position.

In some embodiments, the order case area further includes a standby delivery position located upstream of the delivery position, a temporary storage position closest to the delivery position among the plurality of temporary storage positions is a first temporary storage position, and the standby delivery position, the delivery position, and the first temporary storage position are arranged in sequence along a roundabout path.

The controlling the second transport robot to enter an idle temporary storage position includes: determining a relationship between a next position and a current position of the order case in the first sequence; and
controlling, if two positions exist between a next position and a current position of the order case in the first sequence, the second transport robot to travel out of the delivery position and travel into the first temporary storage position for temporary storage.

In some embodiments, the order case area further includes a standby delivery position located upstream of the delivery position, a temporary storage position closest to the delivery position among the plurality of temporary storage positions is a first temporary storage position, and the standby delivery position, the delivery position, and the first temporary storage position are arranged in sequence along a roundabout path.

The controlling the second transport robot to enter an idle temporary storage position includes: determining a relationship between a next position and a current position of the order case in the first sequence; and
determining, if at least three positions exist between a next position and a current position of the order case in the first sequence, whether any order case among order cases in the first sequence located between the current position and next position needs to use the first temporary storage position;
controlling, if so, the second transport robot to travel out of the delivery position and then travel into an idle temporary storage position other than the first temporary storage position for temporary storage; and
controlling, if not, the second transport robot to travel out of the delivery position and then travel into the first temporary storage position for temporary storage.

In some embodiments, the determining whether any order case among order cases in the first sequence located between the current position and next position needs to use the first temporary storage position includes:
determining whether an order case repeats in the first sequence at next position that is at least one position apart from the current position.

In some embodiments, the controlling, if so, the second transport robot to travel out of the delivery position and then travel into an idle temporary storage position other than the first temporary storage position for temporary storage includes:
determining, from all idle temporary storage positions other than the first temporary storage position, a temporary storage position closest to the delivery position; and
controlling the second transport robot to travel out of the delivery position and then travel into the temporary storage position closest to the delivery position for temporary storage.

In some embodiments, after the controlling the second transport robot to travel out of the order case area, the method further includes:
controlling the second transport robot carrying the empty order case to travel into the order case area from the second station entry passage.

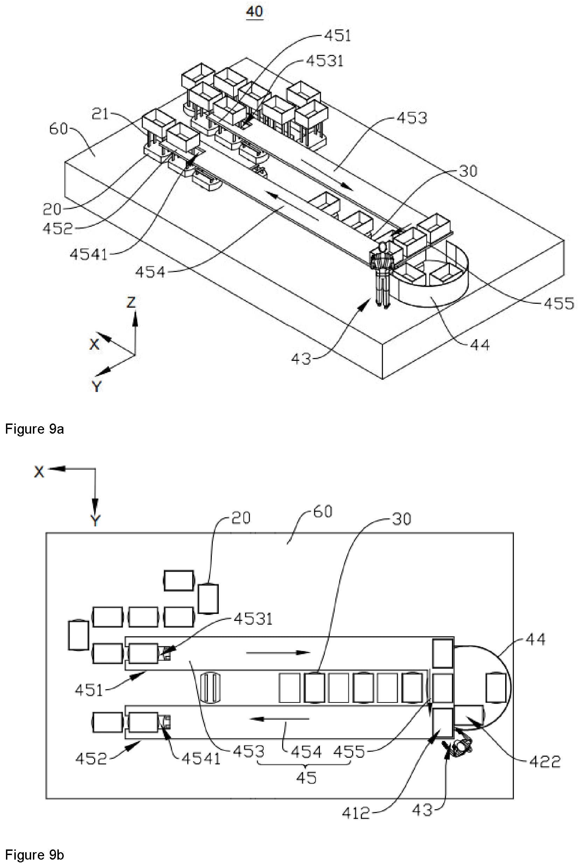

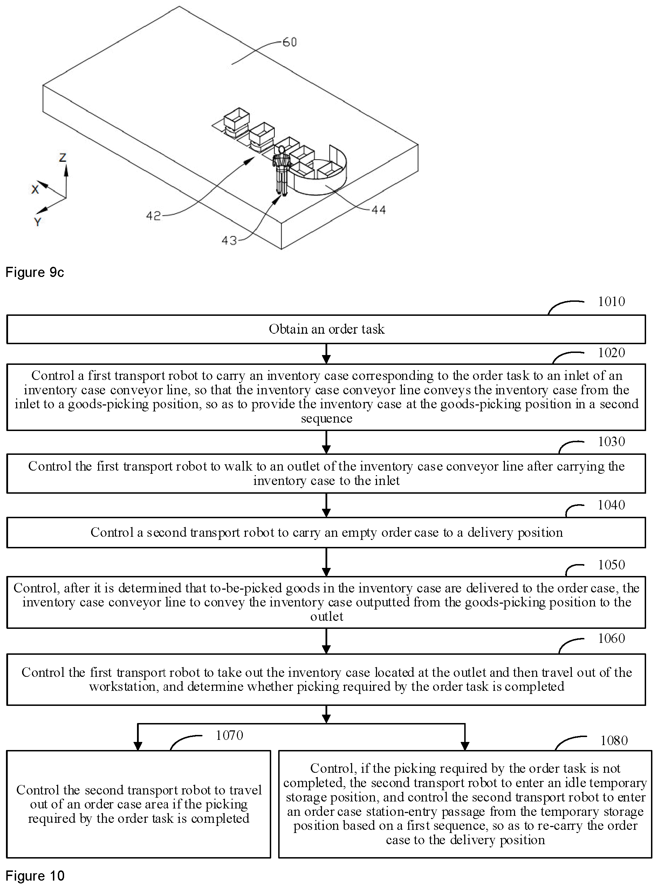

An embodiment of this application further provides a workstation in a warehousing system. FIG. 9a is a schematic structural diagram of yet another workstation according to an embodiment of this application. FIG. 9b is a schematic planar diagram of yet another workstation according to an embodiment of this application. FIG. 9c is a schematic structural diagram of an order case area of yet another workstation according to an embodiment of this application. For convenience of description, XYZ coordinate axes are defined in this embodiment of this application. The X axis indicates a first direction, the Y axis indicates a second direction, and the Z axis indicates a third direction. The X axis includes a positive direction of the X axis and a negative direction of the X axis, and the Y axis includes a positive direction of the Y axis and a negative direction of the Y axis.

As shown in FIG. 9a to FIG. 9c, a workstation 40 includes an inventory case conveyor line 45, an order case area 42, and a picking position 43. Arrows shown in the figures indicate a conveying direction of the inventory case conveyor line 45.

The inventory case conveyor line 45 is arranged on a ground 60, and a gap exists between a conveying plane of the inventory case conveyor line 45 and the ground 60, so that in a vertical direction (the third direction Z), the inventory case conveyor line 45 is located at an upper layer of the order case area 42. In other words, in the workstation 40, an upper layer is configured to convey inventory cases, and a lower layer is configured to convey order cases. The space between the inventory case conveyor line 45 and the ground 60 allows a first transport robot 20 and a second transport robot 30 to move, so as to save a space. The first transport robot 20 and the second transport robot 30 may be lifting warehousing robots, which can pick and place a single case (an inventory case or an order case), have a small size, can operate rapidly, and needs low costs.

The inventory case conveyor line 45 has a goods-picking position 412, the first transport robot 20 is configured to carry an inventory case to an inlet 451 of the inventory case conveyor line 45 in sequence, and the inventory case conveyor line 45 is configured to convey the inventory case from the inlet 451 to the goods-picking position 412, so as to provide the inventory case at the goods-picking position 412 in a second sequence, where the inventory case is configured to store goods. The first transport robot 20 further walks to an outlet 452 of the inventory case conveyor line 45 after carrying the inventory case to the inlet 451, so as to wait to take away an inventory case conveyed to the outlet 452.

The inventory case conveyor line 45 is further configured to convey an inventory case outputted from the goods-picking position 412 to the outlet 452 of the inventory case conveyor line 45. The first transport robot 20 takes out the inventory case located at the outlet 452 and then travels out of the workstation 40.

Specifically, the inventory case conveyor line 45 may include a first conveyor line 453, a second conveyor line 454, and a third conveyor line 455. The first conveyor line 453 and the second conveyor line 454 are arranged in parallel along the first direction X, a conveying direction of the first conveyor line 453 (the negative direction of the X axis) is opposite to a conveying direction of the second conveyor line 454 (the positive direction of the X axis), the third conveyor line 455 is arranged along the second direction Y and is configured to connect to the first conveyor line 453 and the second conveyor line 454, and a conveying direction of the third conveyor line 455 is the positive direction of the Y axis. Therefore, a U-shaped conveying structure is formed. The U-shaped conveying structure can save a space along the first direction X. Certainly, in case of a sufficient area, the inventory case conveyor line 45 and the order case area 42 may be arranged along the first direction X. The goods-picking position 412 is located at an outlet of the third conveyor line 455 or at an inlet of the second conveyor line 454. The first transport robot 20 is configured to carry an inventory case to the inlet 451 of the first conveyor line 453 in sequence, and then walk to the outlet 452 of the second conveyor line 454 to wait. The first conveyor line 453 is configured to convey the inventory case to the third conveyor line 455. The third conveyor line 455 is configured to convey the inventory case to the goods-picking position 412, so as to provide the inventory case at the goods-picking position 412 in the second sequence. The second conveyor line 454 is configured to convey the inventory case outputted from the goods-picking position 412 to the outlet 452 of the second conveyor line 454. After the first transport robot 20 located at the outlet 452 takes out the inventory case located at the outlet 452 of the second conveyor line 454, the first transport robot travels out of the workstation 40.

The inventory case conveyor line 45 may be various conveyor structures capable of conveying items such as a belt conveyor line or a roller conveyor line. Since the inventory case needs to be conveyed from the first conveyor line 453 to the third conveyor line 455 and from the third conveyor line 455 to the second conveyor line 454, the conveying direction of the first conveyor line 453 is perpendicular to the conveying direction of the third conveyor line 455, and the conveying direction of the second conveyor line 454 is also perpendicular to the conveying direction of the third conveyor line 455, one or more of the first conveyor line 453, the second conveyor line 454, and the third conveyor line 455 may be provided with a transfer mechanism, such as a movable push rod or baffle, so as to realize conveying of the inventory case among the conveyor lines through movement of the transfer mechanism.

A manner of docking between the first transport robot 20 and the conveyor lines is as follows. As shown in the figures, a first notch 4531 is provided at the inlet 451. When a first transport robot 20 carrying an inventory case walks to a position near the inlet 451, a top holding member 21 of the first transport robot 20 which holds the inventory case on the top may be inserted into the first notch 4531. The first transport robot walks by a short distance along the conveying direction of the first conveyor line 453, and then controls the top holding member 21 to descend to place the inventory case onto the first conveyor line 453. A second notch 4541 is further provided at the outlet 452. After the first transport robot 20 walks to a position below the second notch 4541, when the second conveyor line 454 conveys the inventory case to a position above the second notch 4541, the first transport robot 20 may cause the top holding member 21 which is in a descending state to ascend and be inserted into the second notch 4541, to hold the inventory case on the top and walk by a short distance along the conveying direction of the second conveyor line 454, thereby taking out the inventory case from the second conveyor line 454.

The docking between the first transport robot 20 and the conveyor line may be performed in other manners, which is not limited in this application. For example, a comb tooth structure may be provided at the inlet 451 or the outlet 452 for docking. The first transport robot 20 is provided with a top holding member adapting to the comb tooth structure. The top holding member may pass through the comb tooth structure to realize docking with the conveyor line.

The order case area 42 includes an order case station-entry passage, a delivery position 422, and an order case station-exit passage arranged in sequence, and further includes a plurality of temporary storage positions located between the order case station-entry passage and the order case station-exit passage. The order case station-entry passage, the plurality of temporary storage positions, and the order case station-exit passage are all arranged in parallel along the first direction X, and a station entry direction of the order case station-entry passage (the negative direction of the X axis) is opposite to a station exit direction of the order case station-exit passage (the positive direction of the X axis). Therefore, a U-shaped passage structure is formed. The U-shaped passage structure can save a space along the first direction X.

The order case station-entry passage is configured for a second transport robot 30 to travel into the order case area 42 and walk to the delivery position 422, the second transport robot 30 carries an order case, and the order case is configured to receive goods picked from the inventory case. The plurality of temporary storage positions each are configured to temporarily store a second transport robot 30 carrying a first-type order case, the first-type order case is an order case in which partial picked goods are stored, a walking direction of the second transport robot 30 temporarily stored in the temporary storage position is perpendicular to a walking direction of the second transport robot 30 in the order case station-entry passage or the order case station-exit passage, the second transport robot 30 temporarily stored in the temporary storage position enters the order case station-entry passage in a first sequence, and the first sequence is determined based on the second sequence, so that the order case arriving at the delivery position 422 matches the inventory case arriving at the goods-picking position 412. The order case station-exit passage is configured for a second transport robot 30 traveling out from the delivery position 422 to travel out of the order case area 42 or for the second transport robot 30 traveling out from the delivery position 422 to travel into the temporary storage position. In this embodiment, a specific structure and a working principle of the order case area 42 are similar to those in the embodiments in FIG. 1 to FIG. 7d, and reference may be made to the above embodiments. The details are not detailed in FIG. 9a to FIG. 9c.

The picking position 43 is adjacent to a projection of the goods-picking position 412 on a ground 60 and the delivery position 422, and is configured to accommodate a picking person or to be provided with a picking device, so that the picking person or the picking device picks goods from an inventory case located at the goods-picking position 412 and places the goods into an order case located at the delivery position 422.

In this embodiment of this application, in the second direction Y, the inventory case conveyor line 45 and the order case area 42 are located on a same side of the picking position 43. For example, as shown in the figures, the inventory case conveyor line 45 and the order case area 42 are both located on a left side of the picking position 43. Arranging the inventory case conveyor line 45 and the order case area 42 on the same side of the picking position 43 can save a space.

The workstation 40 further includes an isolation portion 44. The isolation portion 44 is arranged between the order case area 42 and the picking position 43. The isolation portion 44 is arranged to isolate a picking person from a second transport robot 30, so as to prevent the second transport robot 30 from colliding with and injuring the picking person.

A main difference between this embodiment and the embodiments shown in FIG. 1 to FIG. 8 lies in a circulation mode of the inventory cases. In the embodiments shown in FIG. 1 to FIG. 8, the first transport robot 20 walks within the inventory case area 41 along the set path to realize conveying of the inventory cases. Specifically, the inventory case is directly carried to the goods-picking position 412 by the first transport robot 20. In this embodiment, the circulation mode of the inventory cases is as follows: The first transport robot 20 carries an inventory case to the inlet 451 of the inventory case conveyor line 45, the inventory case conveyor line 45 conveys the inventory case to the goods-picking position 412, and then the inventory case conveyor line 45 further conveys the inventory case after picking to the outlet 452 of the inventory case conveyor line 45. After carrying the inventory case to the inlet 451, the first transport robot 20 moves to the outlet 452 and waits. When the inventory case for which picking is completed is conveyed to the outlet 452, the first transport robot 20 takes out the inventory case located at the outlet 452 and then leaves the workstation 40. In this embodiment, the carrying of the inventory case is jointly realized by the first transport robot 20 and the inventory case conveyor line 45. In this embodiment, the inventory case conveyor line 45 and the order case area 42 may share a partial floor area, which can save a floor area.

In this embodiment, the circulation mode of the order cases is the same as that in the embodiments shown in FIG. 1 to FIG. 8.

In this embodiment of this application, the workstation 40 is divided into the inventory case conveyor line 45, the order case area 42, and the picking position 43. The first transport robot 20 carrying the inventory case carries the inventory case in sequence to the inventory case conveyor line 45, and the inventory case conveyor line 45 conveys the inventory case in sequence to the goods-picking position 412. Moreover, the second transport robot 30 carrying the order case enter the order case station-entry passage of the order case area 42 in sequence, and then carries the order case to the delivery position 422 of the order case area 42. The picking person or the picking device picks goods from the inventory case at the goods-picking position 412 and places the goods into the order case at the delivery position 422. An order case on which pocking required by the order task is not fully completed is carried away from the delivery position 422 by the second transport robot 30, which enters the temporary storage position in the order case area 42 for temporary storage and then enters the order case station-entry passage in a first sequence. The first sequence is determined based on the second sequence of inventory cases in the inventory case conveyor line 45, so that the order case re-arriving at the delivery position 422 matches the inventory case arriving at the goods-picking position 412. Because the first transport robot 20 and the inventory case conveyor line 45 convey the inventory case to the goods-picking position 412 adjacent to the picking position 43, the second transport robot 30 carries the order case to the delivery position 422 adjacent to the picking position 43, and the second transport robot 30 implements temporary storage, sorting, and switching of the order case based on the second sequence of the inventory cases on the inventory case conveyor line 45, the inventory case arriving at the goods-picking position 412 matches the order case arriving at the delivery position 422, so that the picking person or the picking device can perform picking, thereby improving picking efficiency at the workstation 40, reducing labor intensity of the picking person, and reducing picking errors.

FIG. 10 is a schematic flowchart of another method for picking goods at a workstation according to an embodiment of this application. The method is applied to a server 50 in a warehousing system 1. The workstation 40 includes an inventory case conveyor line 45, an order case area 42, and a picking position 43. The inventory case conveyor line 45 has a goods-picking position 412. The order case area 42 includes an order case station-entry passage, a delivery position 422, and an order case station-exit passage arranged in sequence, and further includes a plurality of temporary storage positions located between the order case station-entry passage and the order case station-exit passage. The order case station-entry passage is configured for a second transport robot 30 to travel into the order case area 42 and walk to the delivery position 422, the second transport robot 30 carries an order case, and the order case is configured to receive goods picked from the inventory case. The plurality of temporary storage positions each are configured to temporarily store a second transport robot 30 carrying a first-type order case, the first-type order case is an order case in which partial picked goods are stored, and a walking direction of the second transport robot 30 temporarily stored in the temporary storage position is perpendicular to a walking direction of the second transport robot 30 in the order case station-entry passage or the order case station-exit passage. The order case station-exit passage is configured for a second transport robot 30 traveling out from the delivery position 422 to travel out of the order case area 42 or for the second transport robot 30 traveling out from the delivery position 422 to travel into the temporary storage position. The picking position 43 is adjacent to a projection of the goods-picking position 412 on a ground 60 and the delivery position 422, and is configured to accommodate a picking person or to be provided with a picking device, so that the picking person or the picking device picks goods from an inventory case located at the goods-picking position 412 and places the goods into an order case located at the delivery position 422. The workstation 40 may be the workstation 40 in the embodiment shown in FIG. 9 above.

As shown in FIG. 10, the method includes the following steps:
Step 1010: Obtain an order task.
Step 1020: Control the first transport robot to carry an inventory case corresponding to the order task to an inlet of the inventory case conveyor line, so that the inventory case conveyor line conveys the inventory case from the inlet to the goods-picking position, so as to provide the inventory case at the goods-picking position in a second sequence,
   where the inventory case is configured to store goods.
Step 1030: Control the first transport robot to walk to an outlet of the inventory case conveyor line after carrying the inventory case to the inlet.
Step 1040: Control the second transport robot to carry an empty order case to the delivery position.
Step 1050: Control, after it is determined that to-be-picked goods in the inventory case are delivered to the order case, the inventory case conveyor line to convey the inventory case outputted from the goods-picking position to the outlet.
Step 1060: Control the first transport robot to take out the inventory case located at the outlet and then travel out of the workstation, and determine whether picking required by the order task is completed.
Step 1070: Control the second transport robot to travel out of the order case area if the picking required by the order task is completed.
Step 1080: Control, if the picking required by the order task is not completed, the second transport robot to enter an idle temporary storage position, and control the second transport robot to enter the order case station-entry passage from the temporary storage position based on a first sequence, so as to re-carry the order case to the delivery position, where
   the first sequence is determined based on the second sequence, so that the order case arriving at the delivery position matches the inventory case arriving at the goods-picking position.

In this embodiment, the circulation steps of the order case are the same as those in the embodiment shown in FIG. 8, which are not described in detail herein.

An embodiment of this application provides a computer-readable storage medium. The storage medium has at least one executable instruction stored therein. The executable instruction, when run on an electronic device, causes the electronic device to perform the operations in the method for picking goods at a workstation described in the above embodiments. The computer-readable storage medium is a nonvolatile storage medium. The electronic device may be a server of a warehousing system.

An embodiment of this application provides a computer program product, including a computer program. The computer program, when executed by a processor, implements the operations in the method for picking goods at a workstation described in the above embodiments.

An embodiment of this application provides a computer program. The computer program may be invoked by a processor to cause an electronic device to perform the operations in the method for picking goods at a workstation described in the above embodiments. The electronic device may be a server of a warehousing system.

Algorithms or displays provided herein are not inherently related to any particular computer, virtual system, or another device. Various general-purpose systems may be further used with the teachings based herein. According to the above description, a structure required for constructing such systems is obvious. In addition, this embodiment of this application is not directed to any specific programming language. It should be understood that the content of this application described herein may be implemented by using various programming languages, and the above description of the specific language is intended to disclose the optimal implementation of this application.

In the specification provided herein, massive specific details are described. However, it may be understood that the embodiments of this application may be practiced without these specific details. In some examples, well-known methods, structures, and technologies are not shown in detail, so as to avoid obscuring the understanding of the specification.

Similarly, it should be understood that, to simply this application and assist in understanding one or more of the aspects of the present invention, in the description of the exemplary embodiments of this application above, the features of the embodiments of this application are sometimes grouped together into a single embodiment, figure, or a description thereof. However, the disclosed method should not be interpreted as reflecting the following intent: the claimed application claims more features than those explicitly recorded in each claim.

It may be understood by a person skilled in the art that the modules in the device described in the embodiments may be adaptively modified and arranged in one or more devices different from those in the embodiments. The modules, units, or components in the embodiments may be combined into one module, unit, or component, or may be divided into a plurality of sub-modules, sub-units, or sub-components. Except where such features and/or processes or units are mutually exclusive, any combination of all of the features disclosed in this specification (including the appended claims, abstract, and drawings) and all of the processes or units of any method or device so disclosed may be employed. Unless otherwise explicitly stated, each feature disclosed in the specification (including the appended claims, abstract, and drawings) may be replaced with an alternative feature that provides the same, equivalent, or similar purpose.

It should be noted that the above embodiments are descriptions of this application rather than limitations on this application, and a person skilled in the art may design alternative embodiments without departing from the scope of the appended claims. In the claims, any reference symbol between parentheses should not be constructed as a limitation on the claims. The word "include" does not exclude existence of elements or steps that are not listed in the claims. The word "a/an" or "one" before an element does not exclude existence of a plurality of such elements. This application may be implemented by means of hardware including different elements and a properly programmed computer. In the unit claims listing a plurality of devices, some of these devices may be specifically embodied through the same hardware item. The usage of words such as first, second, and third does not indicate any order. These words may be construed as names. The steps in the above embodiments, unless otherwise specified, should not be construed as a limitation on the order of execution.

## Claims

1. A workstation, configured for goods picking, comprising an inventory case area, an order case area, and a picking position;
wherein the inventory case area comprises a first station entry passage, a goods-picking position, and a first station exit passage arranged in sequence, and the inventory case area further comprises a standby passage adjacent to the first station entry passage;
wherein the first station entry passage is configured for a first transport robot traveling into the inventory case area to walk to the goods-picking position, and the first transport robot carries an inventory case in which goods are stored;
wherein the standby passage is configured for the first transport robot traveling into the inventory case area to stay and wait to move into the first station entry passage when no idle queue position exists on the first station entry passage;
wherein the first station exit passage is configured for the first transport robot traveling out from the goods-picking position to travel out of the inventory case area;
wherein the order case area comprises a second station entry passage, a delivery position, and a second station exit passage arranged in sequence, and the order case area further comprises a plurality of temporary storage positions located between the second station entry passage and the second station exit passage;
wherein the second station entry passage is configured for a second transport robot traveling into the order case area to walk to the delivery position, the second transport robot carries an order case, and the order case is configured to receive goods picked from the inventory case;
wherein the plurality of temporary storage positions each are configured to temporarily store a second transport robot carrying a first-type order case, the first-type order case being an order case in which partial picked goods are stored, a walking direction of the second transport robot temporarily stored in the temporary storage position being perpendicular to a walking direction of the second transport robot on the second station entry passage or the second station exit passage, the second transport robot temporarily stored in the temporary storage position being configured to enter the second station entry passage in a first sequence, and the first sequence being determined based on a second sequence of inventory cases on the first station entry passage, so that the order case arriving at the delivery position matches the inventory case arriving at the goods-picking position;
wherein the second station exit passage is configured for the second transport robot traveling out from the delivery position to travel out of the order case area, or the second station exit passage is configured for the second transport robot traveling out from the delivery position to travel into the temporary storage position; and
wherein the picking position is adjacent to the goods-picking position and the delivery position, and is configured to accommodate a picking person or to be provided with a picking device, so that the picking person or the picking device picks goods from an inventory case located at the goods-picking position and places the goods into an order case located at the delivery position.

2. The workstation according to claim 1, wherein the standby passage is further configured for a first transport robot on the first station entry passage to move into to adjust the second sequence.

3. The workstation according to claim 1, wherein the first station entry passage, the standby passage, the first station exit passage, the second station entry passage, the plurality of temporary storage positions, and the second station exit passage are all arranged in parallel along a first direction, a station entry direction of the first station entry passage is opposite to a station exit direction of the first station exit passage, and a station entry direction of the second station entry passage is opposite to a station exit direction of the second station exit passage.

4. The workstation according to claim 1, wherein the first station entry passage, the standby passage, and the first station exit passage are all arranged in parallel along a second direction, and a station entry direction of the first station entry passage is opposite to a station exit direction of the first station exit passage;
wherein the second station entry passage, the plurality of temporary storage positions, and the second station exit passage are all arranged in parallel along a first direction, and a station entry direction of the second station entry passage is opposite to a station exit direction of the second station exit passage; and
wherein the first direction is perpendicular to the second direction, and in the first direction, the inventory case area and the order case area are respectively located on two sides of the picking position.

5. The workstation according to claim 3, wherein the inventory case area further comprises a standby goods-picking position located upstream of the goods-picking position, and the standby goods-picking position and the goods-picking position are arranged in sequence along an arc-shaped path between the first station entry passage and the first station exit passage;
wherein the order case area further comprises a standby delivery position located upstream of the delivery position, and the standby delivery position and the delivery position are arranged in sequence along an arc-shaped path between the second station entry passage and the second station exit passage; and
wherein in the first direction, the inventory case area and the order case area are located on a same side of the picking position.

6. The workstation according to claim 3 or 4, wherein the inventory case area further comprises a standby goods-picking position located upstream of the goods-picking position, and the standby goods-picking position, the goods-picking position, and the first station exit passage are arranged in sequence along the station exit direction of the first station exit passage; and
wherein the order case area further comprises a standby delivery position located upstream of the delivery position, and the standby delivery position and the delivery position are arranged in sequence along an arc-shaped path between the second station entry passage and the second station exit passage.

7. The workstation according to claim 6, wherein a temporary storage position among the plurality of temporary storage positions closest to the delivery position is a first temporary storage position, and the standby delivery position, the delivery position, and the first temporary storage position are arranged in sequence along a roundabout path.

8. The workstation according to claim 3 or 4, wherein the standby passage is located between the first station entry passage and the first station exit passage.

9. The workstation according to claim 1, further comprising an isolation portion arranged between the inventory case area and the picking position, and between the order case area and the picking position.

10. The workstation according to claim 9, wherein the isolation portion comprises a first barrier and a second barrier, the first barrier is located between the inventory case area and the picking position, and the second barrier is located between the order case area and the picking position.

11. The workstation according to claim 1, wherein the first station entry passage comprises a plurality of first queue positions, the standby passage comprises a plurality of standby positions;
wherein the goods-picking position, each of the first queue positions, and each of the standby positions each are provided with an identification element, and the identification element is configured to be identified by the first transport robot to achieve positioning of the first transport robot;
wherein the second station entry passage comprises a plurality of second queue positions, the second station exit passage comprises a plurality of second station exit positions; and
wherein the delivery position, each of the second queue positions, each of the second station exit positions, and each of the temporary storage positions each are provided with an identification element, and the identification element is configured to be identified by the second transport robot to achieve positioning of the second transport robot.

12. A workstation, for goods picking, comprising an inventory case conveyor line, an order case area, and a picking position;
wherein the inventory case conveyor line has a goods-picking position, a first transport robot being configured to carry an inventory case to an inlet of the inventory case conveyor line in sequence, and the inventory case conveyor line being configured to convey the inventory case from the inlet to the goods-picking position, so as to provide the inventory case at the goods-picking position in a second sequence, wherein the inventory case is configured to store goods;
wherein the inventory case conveyor line is further configured to convey an inventory case outputted from the goods-picking position to an outlet of the inventory case conveyor line, and the first transport robot is further configured to carry the inventory case to the inlet and then walk to the outlet of the inventory case conveyor line, to take out the inventory case located at the outlet and then travel out of the workstation;
wherein the order case area comprises an order case station-entry passage, a delivery position, and an order case station-exit passage arranged in sequence, and the order case area further comprises a plurality of temporary storage positions located between the order case station-entry passage and the order case station-exit passage;
wherein the order case station-entry passage is configured for a second transport robot to travel into the order case area and walk to the delivery position, the second transport robot being configured to carry an order case, and the order case being configured to receive goods picked from the inventory case;
wherein the plurality of temporary storage positions each are configured to temporarily store a second transport robot carrying a first-type order case, the first-type order case is an order case in which partial picked goods are stored, a walking direction of the second transport robot temporarily stored in the temporary storage position being perpendicular to a walking direction of the second transport robot in the order case station-entry passage or the order case station-exit passage, the second transport robot temporarily stored in the temporary storage position being configured to enter the order case station-entry passage in a first sequence, and the first sequence being determined based on the second sequence, so that the order case arriving at the delivery position matches the inventory case arriving at the goods-picking position;
wherein the order case station-exit passage is configured for a second transport robot traveling out from the delivery position to travel out of the order case area or for the second transport robot traveling out from the delivery position to travel into the temporary storage position; and
wherein the picking position is adjacent to a projection of the goods-picking position on a ground and the delivery position, and is configured to accommodate a picking person or to be provided with a picking device, so that the picking person or the picking device picks goods from an inventory case located at the goods-picking position and places the goods into an order case located at the delivery position.

13. The workstation according to claim 12, wherein in a vertical direction, the inventory case conveyor line is located at an upper layer of the order case area.

14. The workstation according to claim 12 or 13, wherein the inventory case conveyor line comprises a first conveyor line, a second conveyor line, and a third conveyor line, the first conveyor line and the second conveyor line being arranged in parallel along a first direction, the third conveyor line being arranged along a second direction and the third conveyor line being configured to connect to the first conveyor line and the second conveyor line, the goods-picking position being provided at an outlet of the third conveyor line or at an inlet of the second conveyor line, the first direction being perpendicular to the second direction, and conveying directions of the first conveyor line and the second conveyor line being opposite;
wherein the first transport robot is configured to carry the inventory case in sequence to an inlet of the first conveyor line, the first conveyor line is configured to convey the inventory case to the third conveyor line, and the third conveyor line is configured to convey the inventory case to the goods-picking position, to provide the inventory case at the goods-picking position in the second sequence;
wherein the second conveyor line is configured to convey the inventory case outputted from the goods-picking position to an outlet of the second conveyor line, and the first transport robot is further configured to carry the inventory case to the inlet of the first conveyor line and then walk to the outlet of the second conveyor line, to take out the inventory case located at the outlet of the second conveyor line and then travel out of the workstation; and
wherein the order case station-entry passage, the plurality of temporary storage positions, and the order case station-exit passage are all arranged in parallel along the first direction, and a station entry direction of the order case station-entry passage is opposite to a station exit direction of the order case station-exit passage.

15. The workstation according to claim 14, wherein the order case area further comprises a standby delivery position located upstream of the delivery position, and the standby delivery position and the delivery position are arranged in sequence along an arc-shaped path between the order case station-entry passage and the order case station-exit passage; and
wherein in the second direction, the inventory case conveyor line and the order case area are located on a same side of the picking position.

16. The workstation according to claim 15, wherein a temporary storage position among the plurality of temporary storage positions closest to the delivery position is a first temporary storage position, and the standby delivery position, the delivery position, and the first temporary storage position are arranged in sequence along a roundabout path.

17. The workstation according to claim 12 or 13, wherein the workstation further comprises an isolation portion arranged between the order case area and the picking position.

18. The workstation according to claim 12 or 13, wherein the order case station-entry passage comprises a plurality of order case queue positions, the order case station-exit passage comprises a plurality of order case station-exit positions;
wherein the delivery position, each of the order case queue positions, each of the order case station-exit positions, and each of the temporary storage positions each are provided with an identification element, and the identification element is configured to be identified by the second transport robot to achieve positioning of the second transport robot.

19. A warehousing system, comprising a shelving unit, a first transport robot, a second transport robot, and the workstation according to any one of claims 1 to 18, wherein
the shelving unit is configured to store an inventory case and an order case;
the first transport robot is configured to carry an inventory case for which picking is to be performed from the shelving unit to the workstation and carry an inventory case for which picking is performed from the workstation to the shelving unit; and
the second transport robot is configured to carry an empty order case from the shelving unit to the workstation and carry an order case on which picking required by an order task is completed out of the workstation.

20. A method for picking goods at a workstation, applied to a server in a warehousing system, wherein the workstation comprises an inventory case area, an order case area, and a picking position; wherein the inventory case area comprises a first station entry passage, a goods-picking position, and a first station exit passage arranged in sequence, and the inventory case area further comprises a standby passage adjacent to the first station entry passage; wherein the first station entry passage is configured for a first transport robot traveling into the inventory case area to walk to the goods-picking position, and the first transport robot carries an inventory case in which goods are stored; wherein the standby passage is configured for the first transport robot traveling into the inventory case area to stay and wait to move into the first station entry passage when no idle queue position exists on the first station entry passage; wherein the first station exit passage is configured for the first transport robot traveling out from the goods-picking position to travel out of the inventory case area; wherein the order case area comprises a second station entry passage, a delivery position, and a second station exit passage arranged in sequence, and the order case area further comprises a plurality of temporary storage positions located between the second station entry passage and the second station exit passage; wherein the second station entry passage is configured for a second transport robot traveling into the order case area to walk to the delivery position, the second transport robot carries an order case, and the order case is configured to receive goods picked from the inventory case; wherein the plurality of temporary storage positions each are configured to temporarily store a second transport robot carrying a first-type order case, the first-type order case is an order case in which partial picked goods are stored, and a walking direction of the second transport robot temporarily stored in a temporary storage position is perpendicular to a walking direction of the second transport robot on the second station entry passage or the second station exit passage; wherein the second station exit passage is configured for the second transport robot traveling out from the delivery position to travel out of the order case area or for the second transport robot traveling out from the delivery position to travel into the temporary storage position; and wherein the picking position is adjacent to the goods-picking position and the delivery position, and is configured to accommodate a picking person or to be provided with a picking device, so that the picking person or the picking device picks goods from an inventory case located at the goods-picking position and places the goods into an order case located at the delivery position; and
wherein the method comprises:
obtaining an order task;
controlling the first transport robot to carry an inventory case corresponding to the order task to the goods-picking position;
controlling the second transport robot to carry an empty order case to the delivery position;
controlling the first transport robot to travel out of the inventory case area after it is determined that to-be-picked goods in the inventory case are delivered to the order case, and determining whether picking required by the order task is completed;
controlling the second transport robot to travel out of the order case area if the picking required by the order task is completed; and
controlling, if the picking required by the order task is not completed, the second transport robot to enter an idle temporary storage position, and controlling the second transport robot to enter the second station entry passage from the temporary storage position based on a first sequence, so as to re-carry the order case to the delivery position, wherein the first sequence is determined based on a second sequence of inventory cases on the first station entry passage, so that the order case arriving at the delivery position matches the inventory case arriving at the goods-picking position.

21. The method according to claim 20, further comprising:
predicting a sequence in which the inventory cases arrive at the workstation, determining the second sequence of the inventory cases on the first station entry passage based on the sequence in which the inventory cases arrive at the workstation, and determining the first sequence based on the second sequence; or
obtaining a position of the first transport robot on the first station entry passage, determining the second sequence of the inventory cases on the first station entry passage based on the position, and determining the first sequence based on the second sequence.

22. The method according to claim 20, wherein the second station entry passage, the plurality of temporary storage positions, and the second station exit passage are all arranged in parallel along a first direction, and a station entry direction of the second station entry passage is opposite to a station exit direction of the second station exit passage; and
wherein the controlling the second transport robot to enter the second station entry passage from the temporary storage position based on a first sequence comprises:
determining a first position of the order case carried by the second transport robot temporarily stored at the temporary storage position in the first sequence, and determining a second position on the second station entry passage side by side with the temporary storage position in a second direction, wherein the second direction is perpendicular to the first direction;
controlling, if a second transport robot carrying an order case that follows the first position in the first sequence enters the second station entry passage, the second transport robot carrying an order case that follows the first position in the first sequence to wait upstream of the second position on the second station entry passage;
determining whether all order cases before the first position in the first sequence are on the second station entry passage and located downstream of the second position on the second station entry passage; and
controlling, if so, the second transport robot to move from the temporary storage position to the second position on the second station entry passage.

23. The method according to claim 20, wherein the controlling the second transport robot to enter the second station entry passage from the temporary storage position based on a first sequence comprises:
determining whether paths for all order cases in the first sequence located before the order case to arrive at the delivery position are shorter than a path for the order case to arrive at the delivery position;
controlling, if so, the second transport robot to move from the temporary storage position into the second station entry passage, so that a position of the order case on the second station entry passage conforms to the first sequence; and
controlling, if not, the second transport robot to remain in the temporary storage position until the paths for all of the order cases in the first sequence located before the order case to arrive at the delivery position are shorter than the path for the order case to arrive at the delivery position, and controlling the second transport robot to move from the temporary storage position into the second station entry passage, so that the position of the order case on the second station entry passage conforms to the first sequence.

24. The method according to claim 20, wherein if the picking required by the order task is not completed, the method further comprises:
determining a relationship between a next position and a current position of the order case in the first sequence; and
if the next position of the order case in the first sequence is adjacent to the current position,
controlling the second transport robot to remain in the delivery position to wait for a next inventory case to arrive at the goods-picking position for further picking.

25. The method according to claim 20, wherein the order case area further comprises a standby delivery position located upstream of the delivery position; and
if the picking required by the order task is not completed, the method further comprises:
determining a relationship between a next position and a current position of the order case in the first sequence; and
controlling, if one position exists between the next position and the current position of the order case in the first sequence, the second transport robot to travel out of the delivery position and travel into the standby delivery position to wait after a second transport robot located at the standby delivery position travels into the delivery position.

26. The method according to claim 20, wherein the order case area further comprises a standby delivery position located upstream of the delivery position, a temporary storage position among the plurality of temporary storage positions closest to the delivery position is a first temporary storage position, and the standby delivery position, the delivery position, and the first temporary storage position are arranged in sequence along a roundabout path; and
the controlling the second transport robot to enter an idle temporary storage position comprises: determining a relationship between a next position and a current position of the order case in the first sequence; and
controlling, if two positions exist between a next position and a current position of the order case in the first sequence, the second transport robot to travel out of the delivery position and travel into the first temporary storage position for temporary storage.

27. The method according to claim 20, wherein the order case area further comprises a standby delivery position located upstream of the delivery position, a temporary storage position among the plurality of temporary storage positions closest to the delivery position is a first temporary storage position, and the standby delivery position, the delivery position, and the first temporary storage position are arranged in sequence along a roundabout path; and
the controlling the second transport robot to enter an idle temporary storage position comprises: determining a relationship between a next position and a current position of the order case in the first sequence;
determining, if at least three positions exist between a next position and a current position of the order case in the first sequence, whether any order case among order cases in the first sequence located between the current position and next position needs to use the first temporary storage position;
controlling, if so, the second transport robot to travel out of the delivery position and then travel into an idle temporary storage position other than the first temporary storage position for temporary storage; and
controlling, if not, the second transport robot to travel out of the delivery position and then travel into the first temporary storage position for temporary storage.

28. The method according to claim 27, wherein the determining whether any order case among order cases in the first sequence located between the current position and next position needs to use the first temporary storage position comprises:
determining whether an order case repeats in the first sequence at next position that is at least one position apart from the current position.

29. The method according to claim 27, wherein the controlling, if so, the second transport robot to travel out of the delivery position and then travel into an idle temporary storage position other than the first temporary storage position for temporary storage comprises:
determining, from all idle temporary storage positions other than the first temporary storage position, a temporary storage position closest to the delivery position; and
controlling the second transport robot to travel out of the delivery position and then travel into the temporary storage position closest to the delivery position for temporary storage.

30. The method according to claim 20, wherein after the controlling the second transport robot to travel out of the order case area, the method further comprises:
controlling the second transport robot carrying the empty order case to travel into the order case area from the second station entry passage.

31. A method for picking goods at a workstation, wherein the workstation comprises an inventory case conveyor line, an order case area, and a picking position; wherein the inventory case conveyor line has a goods-picking position; wherein the order case area comprises an order case station-entry passage, a delivery position, and an order case station-exit passage arranged in sequence, and the order case area further comprises a plurality of temporary storage positions located between the order case station-entry passage and the order case station-exit passage; wherein the order case station-entry passage is configured for a second transport robot to travel into the order case area and walk to the delivery position, the second transport robot being configured to carry an order case, and the order case is configured to receive goods picked from the inventory case; wherein the plurality of temporary storage positions each are configured to temporarily store a second transport robot carrying a first-type order case, the first-type order case is an order case in which partial picked goods are stored, and a walking direction of the second transport robot temporarily stored in the temporary storage position being perpendicular to a walking direction of the second transport robot in the order case station-entry passage or the order case station-exit passage; wherein the order case station-exit passage is configured for a second transport robot traveling out from the delivery position to travel out of the order case area or for the second transport robot traveling out from the delivery position to travel into the temporary storage position; and wherein the picking position is adjacent to a projection of the goods-picking position on a ground and the delivery position, and is configured to accommodate a picking person or to be provided with a picking device, so that the picking person or the picking device picks goods from an inventory case located at the goods-picking position and places the goods into an order case located at the delivery position; and
the method comprises:
obtaining an order task;
controlling the first transport robot to carry an inventory case corresponding to the order task to an inlet of the inventory case conveyor line, so that the inventory case conveyor line conveys the inventory case from the inlet to the goods-picking position, so as to provide the inventory case at the goods-picking position in a second sequence, wherein the inventory case is configured to store goods; controlling the first transport robot to walk to an outlet of the inventory case conveyor line after carrying the inventory case to the inlet;
controlling the second transport robot to carry an empty order case to the delivery position; controlling, after it is determined that to-be-picked goods in the inventory case are delivered to the order case, the inventory case conveyor line to convey the inventory case outputted from the goods-picking position to the outlet;
controlling the first transport robot to take out the inventory case located at the outlet and then travel out of the workstation, and determining whether picking required by the order task is completed;
controlling the second transport robot to travel out of the order case area if the picking required by the order task is completed; and
controlling, if the picking required by the order task is not completed, the second transport robot to enter an idle temporary storage position, and controlling the second transport robot to enter the order case station-entry passage from the temporary storage position based on a first sequence, so as to re-carry the order case to the delivery position, wherein the first sequence is determined based on the second sequence, so that the order case arriving at the delivery position matches the inventory case arriving at the goods-picking position.

32. A computer-readable storage medium, having a computer program stored thereon, wherein the computer program, when executed by a processor, implements the method for picking goods at a workstation according to any one of claims 20 to 31.
